# EUROPEAN PATENT SPECIFICATION

(11) **EP 4 374 338 B1**
(45) Date of publication and mention of the grant of the patent: **14.10.2026**
(21) Application number: 22758180.8
(22) Date of filing: 27.07.2022
(51) Int. Cl.: G06V 20/56

(54) **PERCEPTION OF 3D OBJECTS IN SENSOR DATA**
WAHRNEHMUNG VON 3D-OBJEKTEN IN SENSORDATEN
PERCEPTION D'OBJETS 3D DANS DES DONNÉES DE CAPTEUR

(30) Priority: 29.07.2021 GB 202110918
(43) Date of publication of application: 29.05.2024
(73) Proprietor: Five AI Limited, Cambridge CB1 2JH (GB)
(72) Inventor: CHANDLER, Robert, Bristol Bristol BS1 6QS (GB)
(74) Representative: Page White Farrer
(86) International application number: PCT/EP2022/071119
(87) International publication number: WO 2023/006836

(56) References cited:
- US-A1- 2020 334 857
- US-A1- 2021 225 034
- US-B2- 10 630 962

## Description

### Technical Field

This disclosure relates to the perception of 3D objects captured in sensor data, such as images, lidar/radar point clouds, and the like.

### Background

Techniques for perceiving 3D objects in sensor data have numerous and varied applications. Computer vision refers broadly to the interpretation of images by computers. The term "perception" herein encompasses a broader range of sensor modalities, and includes techniques for extracting object information from sensor data of a single modality or multiple modalities (such as image, stereo depth, mono depth, lidar and/or radar). 3D object information can be extracted from 2D or 3D sensor data. For example, structure from motion (SfM) is an imaging technique that allows a 3D object to be reconstructed from multiple 2D images.

A perception system is a vital component of an autonomous vehicle. An autonomous vehicle (AV) is a vehicle which is equipped with sensors and control systems which enable it to operate without a human controlling its behaviour. An autonomous vehicle is equipped with sensors which enable it to perceive its physical environment, such sensors including for example cameras, radar and lidar. Autonomous vehicles are equipped with suitably programmed computers which are capable of processing data received from the sensors and making safe and predictable decisions based on the context which has been perceived by the sensors. An autonomous vehicle may be fully autonomous (in that it is designed to operate with no human supervision or intervention, at least in certain circumstances) or semi-autonomous. Semi-autonomous systems require varying levels of human oversight and intervention, such systems including Advanced Driver Assist Systems and level three Autonomous Driving Systems.

Such vehicles must not only perform complex manoeuvres among people and other vehicles, but they must often do so while guaranteeing stringent constraints on the probability of adverse events occurring, such as collision with other agents in the environments. In order for an AV to plan safely, it is crucial that it is able to observe its environment accurately and reliably. This includes the need for accurate and reliable detection of road structure in the vicinity of the vehicle.

The requirement to support real-time planning restricts the class of perception techniques that may be used on an autonomous vehicle. A given perception technique may be unsuitable for this purpose because it is non-causal (requiring knowledge of the future) or non-real time (cannot feasibly be implemented in real-time on-board an AV given the constraints of its on-board computer system). US 10 630 962 B2 discloses systems and methods for object location.

### Summary

"Offline" perception techniques can provide improved results compared with "online" perception. The latter refers to the subset of perception techniques conducive to real-time applications, such as real-time motion planning on-board an autonomous vehicle. Certain perception techniques may be unsuitable for this purpose, but nevertheless have many other useful applications. For example, certain tools used in the testing and development of complex robot systems (such as AVs) require some form of "ground truth". Given a real-world "run", in which a sensor-equipped vehicle (or machine) encounters some driving (or other) scenario, ground truth in the strictest sense means a "perfect" representation of the scenario, free from perception error. Such ground truth cannot exist in reality, however, offline perception techniques can be used to provide "pseudo-ground truth" of sufficient quality for a given application. Pseudo-ground truth extracted from sensor data of a run may be used as a basis for simulation, e.g. to reconstruct the scenario or some variant of the scenario in a simulator for testing an AV planner in simulation; to assess driving performance in the real-world run, e.g. using offline processing to extract agent traces (spatial and motion states) and evaluating the agent traces against predefined driving rules; or as a benchmark for assessing online perception results, e.g. by comparing on-board detections to the pseudo-ground truth as a means of estimating perception error. Another application is training, e.g. in which pseudo-ground truth extracted via offline processing is used as training data to train/re-train online perception component(s). In any of the aforementioned applications, offline perception can be used as an alternative to burdensome manual annotation, or to supplement manual annotation in a way that reduces human annotation effort. It is noted that, unless otherwise indicated, the term "ground truth" is used herein not in the strictest sense, but encompasses pseudo-ground truth obtained though offline perception, manual annotation or a combination thereof.

Various perception techniques are provided herein. Whilst it is generally envisaged that the present techniques would be more suitable for offline applications, the possibility of online applications is not excluded. The viability of on-line applications may increase with future technological advancements.

A first aspect herein provides a computer-implemented method of locating and modelling a moving 3D object captured in a time sequence of multiple images. The method comprises applying, to each image, semantic keypoint detection, in order to generate a set of 2D semantic keypoint detections in an image plane of the image; receiving, for each image, a camera pose and an initial object pose, each pose comprising a 3D location and 3D orientation; determining an initial 3D model of the 3D object; based on the initial 3D model, and the initial object pose and the camera pose for each image, computing a set of keypoint projections in the image plane of the image, the keypoint projections being 2D projections of 3D semantic keypoints of the initial 3D model; and determining a new 3D model and a new object pose for each image based on an aggregate reprojection error between the 2D semantic keypoint detections and the keypoint projections across the time sequence of multiple images.

In embodiments, the new 3D model and the new object pose may be determined via optimization of a cost function, the cost function comprising a reprojection error term.

Each semantic keypoint detection may pertain to a semantic keypoint type, and be in the form of a distribution over possible 2D semantic keypoint locations in the image plane for that semantic keypoint type, the distribution encoding detection confidence for that semantic keypoint type.

The aggregate reprojection error for each semantic keypoint type may be weighted in the reprojection error term according to the detection confidence for that semantic keypoint type.

The distribution over possible 2D semantic keypoint locations may be Gaussian, and the aggregate reprojection error may be weighted by covariance for each keypoint type.

The cost function may comprise a regularization term that penalizes deviation between the 3D semantic keypoints and a 3D semantic keypoint prior.

The 3D semantic keypoint prior may comprise a distribution over possible 3D semantic keypoint locations for each semantic keypoint type, the distribution encoding an extent of expected variation in the 3D semantic keypoint locations, wherein the penalty for each semantic keypoint type in the regularization term is weighted according to the extent of expected variation for that semantic keypoint type.

The distribution over possible 3D semantic keypoint locations may be Gaussian, and the penalty in the regularization term for each semantic keypoint type may be weighted by covariance.

The 3D model may encode expected location information about the 3D keypoints.

The 3D model may have a set of one or more shape parameters that define a shaped 3D object surface, wherein the semantic keypoints are defined relative to the shaped 3D object surface, wherein the new 3D model is determined by tuning the shape parameters.

The new 3D model and the new object pose may be determined using a structure from motion algorithm applied to the cost function, but with the camera poses fixed and without any assumption that the moving 3D object remains static.

The 3D semantic keypoints of the 3D model may correspond to only a first subset of the 2D semantic keypoint detections for each image, wherein a set of reflected 3D semantic keypoints, corresponding to a second subset of the 2D semantic keypoint detections, is determined by reflecting the 3D semantic keypoints about a symmetry plane of the 3D object model, wherein the aggregate reprojection error is determined between (i) the 3D semantic keypoints and the first subset of 2D semantic keypoint detections, and (ii) the reflected 3D semantic keypoints and the second subset of 2D semantic keypoint detections.

The object may belong to a known object class, wherein the semantic keypoint prior or the expected location information has been learned from a training set comprising example objects of the known object class.

An object classifier may be used to determine the known object class form multiple available object classes, the multiple object classes associated with respective expected 3D shape information.

A single 3D model may be determined for the time sequence of images for modelling a rigid object.

The 3D model may be a deformable model, wherein the 3D model varies across different images of the time sequence of images.

Another aspect herein provides a computer-implemented method of locating and modelling a 3D object captured in multiple time-series of sensor data of multiple sensor modalities. The method comprises optimizing a cost function applied to the multiple time-series of sensor data, wherein the cost function aggregates over time and the multiple sensor modalities, and is defined over a set of variables, the set of variables comprising: one or more shape parameters of a 3D object model, and a time sequence of poses of the 3D object model. Each pose comprises a 3D object location and 3D object orientation. The cost function penalizes inconsistency between the multiple time-series of sensor data and the set of variables. The object belongs to a known object class, and the 3D object model or the cost function encodes expected 3D shape information associated with the known object class, whereby the 3D object is located at multiple time instants and modelled by tuning each pose and the shape parameters with the objective of optimizing the cost function.

In embodiments, the variables of the cost function may comprise one or more motion parameters of a motion model for 3D object, and the cost function may also penalize inconsistency between the time sequence of poses and the motion model, whereby the object is located and modelled, and motion of the object is modelled, by tuning each pose, the shape parameters and the motion parameters with the objective of optimizing the cost function.

At least one of the multiple time-series of sensor data comprises a piece of sensor data which is not aligned in time with any pose of the time sequence of poses. The motion model may be used to compute, from the time sequence of poses, an interpolated pose that coincides in time with the piece of sensor data, wherein the cost function penalizes inconsistency between the piece of sensor data and the interpolated pose.

The at least one time-series of sensor data may comprise a time-series of images, and the piece of sensor data may be an image.

The at least one time-series of sensor data may comprise a time-series of lidar or radar data, the piece of sensor data being an individual lidar or radar return, and the interpolated pose coinciding with a return time of the lidar or radar return.

The variables may additionally comprise one or more object dimensions for scaling the 3D object model, the shape parameters being independent of the object dimensions. Alternatively, the shape parameters of the 3D object model may encode both 3D object shape and object dimensions.

The cost function may additionally penalize each pose to the extent the pose violates an environmental constraint.

The environmental constraint may be defined relative to a known 3D road surface.

Each pose may be used to locate the 3D object model relative to the road surface, and the environmental constraint may penalize each pose to the extent the 3D object model does not lie on the known 3D road surface.

The multiple sensor modalities may comprise two or more of: an image modality, a lidar modality and a radar modality.

At least one of the sensor modalities may be such that the poses and the shape parameters are not uniquely derivable from that sensor modality alone.

One of the multiple time-series of sensor data may be a time-series of radar data encoding measured Doppler velocities, wherein the time sequence of poses and the 3D object model are used to compute expected Doppler velocities, and the cost function penalizes discrepancy between the measured Doppler velocities and the expected Doppler velocities.

One of the multiple time-series of sensor data may be a time-series of images, and the cost function may penalize an aggregate reprojection error between (i) the images and (ii) the time sequence of poses and the 3D object model.

A semantic keypoint detector may be applied to each image, and the reprojection error may be defined on semantic keypoints of the object. For example, the method of the first aspect or any embodiment thereof may be applied in this context.

One of the multiple time-series of sensor data may be a time-series of lidar data, wherein the cost function is based on a point-to-surface distance between lidar points and a 3D surface defined by the parameters of the 3D object model, wherein the point-to-surface distance is aggregated across all points of the lidar data.

The 3D object model may be encoded as a distance field.

The expected 3D shape information may be encoded in the 3D object model, the 3D object model learned from a set of training data comprising example objects of the known object class.

The expected 3D shape information may be encoded in a regularization term of the cost function, which penalizes discrepancy between the 3D object model and a 3D shape prior for the known object class.

The method may comprise using an object classifier to determine the known class of the object from multiple available object classes, the multiple object classes associated with respective expected 3D shape information.

The same shape parameters may be applied to each pose of the time sequence of poses for modelling a rigid object.

The 3D object model may be a deformable model, with at least one of the shape parameters varied across frames.

Here, 3D perception is formulated as a cost function optimization problem, where the aim is to tune both the shape of the 3D object model and the time sequence of poses in a way that minimizes some overall measure of error defined in the cost function. A high level of perception accuracy is achieved by aggregating the overall error across both time and multiple sensor modalities, in a way that incorporated additional knowledge of the object class and the shape characteristics normally associated with the known object class.

Further aspects herein provide a computer system comprising one or more computers configured to implement the method of any of the above aspects or embodiments, and computer program code configured to program a computer system to implement the same.

### Brief Description of Figures

Embodiments will now be described by way of example only, with reference to the following figures, in which:
Figure 1 shows a highly schematic block diagram of an AV runtime stack.
Figure 2 shows a block diagram of a perception system on board an autonomous vehicle.
Figure 3 shows a block diagram of 2D image cropping and semantic keypoint detection applied to camera images.
Figure 4 shows an object pose and set of keypoint locations in a world frame of reference and an object frame of reference.
Figure 5 shows how an estimated set of object pose and shape parameters may be evaluated by a cost function.
Figure 6 shows the reprojection of estimated keypoint locations into a 2D image plane for comparison with 2D semantic keypoint detections.
Figure 7 shows how data is manually tagged during a driving run.
Figure 8 shows a block diagram of data processing in a ground truthing pipeline.
Figure 9 shows a block diagram of modelling an object based on sensor data and shape and motion models.
Figure 10 shows a set of error terms contributing to an overall cost function used to model an object.
Figure 11A is a block diagram showing the identification of an object class for an object captured in a set of sensor data.
Figure 11B shows how an identified object class may be used to select a shape model from a set of possible shape models.
Figure 11C shows how an identified object class is used to select a shape prior from a set of possible shape priors.
Figure 12 shows how an expected radial velocity of an object is determined from a current estimate of the object's shape and pose.

### Detailed Description

Various techniques for modelling the shape and pose of an object based on a set of frames captured by one or more sensors will now be described. These techniques are particularly useful in the context of autonomous driving, for example to perform 3D annotation. In one use case within the context of autonomous driving, these techniques may be applied within a refinement pipeline used to generate a 'ground truth' for a given driving scenario based on which the perception stack may be tested (in effect, to perform 3D annotation automatically, or semi-automatically for vehicle testing). This 'ground truth' extracted from a driving scenario may also be used to test AV stack performance against driving rules, or to generate a scenario description based on which similar driving scenarios may be simulated.

Offline perception techniques may be categorised broadly into offline detection techniques and detection refinement techniques. Offline detectors may be implemented as machine learning models trained to take sensor data from one or more sensor modalities as input, and output, for example, a 2D or 3D bounding box identifying an object captured in that sensor data. Offline detectors may provide more accurate annotations than a vehicle's online detectors due to greater available resources, as well as access to data in non-real time, meaning that sensor data from 'future' timesteps can be used to inform annotation of the current timestep. Detection refinement techniques may be applied to an existing detection, for example from a vehicle's online detector(s), optionally in combination with sensor data from one or more sensor modalities. This data may be processed to generate a more accurate set of detections by 'refining' the existing detections based on additional data or knowledge about the objects being detected. For example, an offline detection refinement algorithm may be applied to bounding boxes from an on-board identifying agents of a scene, may apply a motion model based on the expected motion of those agents. This motion model may be specific to the type of object to be detected. For example, vehicles are constrained to move such that sudden turns or jumps are highly improbable, and a motion model specifically for vehicles could encode these kinds of constraints. Obtaining ground-truth vehicle perception outputs using such refinement techniques may be referred to in a 'perception refinement pipeline'.

Increasingly, a complex robotic system, such as an AV, may be required to implement multiple perception modalities and thus accurately interpret multiple forms of perception input. For example, an AV may be equipped with one or more stereo optical sensor (camera) pairs, from which associated depth maps are extracted. In that case, a data processing system of the AV may be configured to apply one or more forms of 2D structure perception to the images themselves - e.g. 2D bounding box detection and/or other forms of 2D localization, instance segmentation etc. - plus one or more forms of 3D structure perception to data of the associated depth maps - such as 3D bounding box detection and/or other forms of 3D localization. Such depth maps could also come from lidar, radar etc, or be derived by merging multiple sensor modalities. In order to train a perception component for a desired perception modality, the perception component is architected so that it can receive a desired form of perception input and provide and a desired form of perception output in response. Further, in order to train a suitably-architected perception component based on supervised learning, annotations need to be provided which accord to the desired perception modality. For example, to train a 2D bounding box detector, 2D bounding box annotations are required; likewise, to train a segmentation component perform image segmentation (pixel-wise classification of individual mage pixels), the annotations need to encode suitable segmentation masks from which the model can learn; a 3D bounding box detector needs to be able to receive 3D structure data, together with annotated 3D bounding boxes etc.

As mentioned above, offline detectors may use prior knowledge about the type of objects to be detected in order to make more accurate predictions about the pose and location of the objects. For example, a detector being trained to detect the location and pose of vehicles may incorporate some knowledge of the typical shape, symmetry and size of a car in order to inform the predicted orientation of an observed car. Knowledge about the motion of objects may also be encoded in an offline perception component in order to generate more accurate trajectories for agents in a scenario. Data from multiple sensor modalities may provide additional knowledge, for example, a refinement technique may use both camera images and radar points to determine refined annotations for a given snapshot of a scene. As will be described in more detail later, radar measures the radial velocity of an object relative to the transmitting device. This can be used to inform both the estimated shape and position for a given object such as a car, by recognising, based on the measured radial velocity and the expected motion of the car, that the radar measurement hit the car at a particular angle consistent with the windshield, for example.

Described herein is a method of performing offline perception of objects in a scene that combines prior knowledge about the shape and motion of the objects, and data from at least two sensor modalities in order to generate improved annotations for the objects over a period of time.

A "frame" in the present context refers to any captured 2D or 3D structure representation, i.e. comprising captured points which define structure in 2D or 3D space (3D structure points), and which provide a static "snapshot" of 3D structure captured in that frame (i.e. a static 3D scene), as well as 2D frames of a captured 2D camera image. Such representations include images, voxel grids, point clouds, surface meshes, and the like, or any combination thereof. For an image or voxel representation, the points are pixels/voxels in a uniform 2D/3D grid, whilst in a point cloud the point are typically unordered and can lie anywhere in 2D/3D space. The frame may be said to correspond to a single time instant, but does not necessarily imply that the frame or the underlying sensor data from which it is derived need to have been captured instantaneously - for example, LiDAR measurements may be captured by a mobile object over a short interval (e.g. around 100ms), in a LiDAR sweep, and "untwisted", to account for any motion of the mobile object, to form a single point cloud. In that event, the single point cloud may still be said to correspond to a single time instant, in the sense of providing a meaningful static snapshot, as a consequence of that untwisting, notwithstanding the manner in which the underlying sensor data was captured. In the context of a time sequence of frames, the time instant to which each frame corresponds is a time index (timestamp) of that frame within the time sequence (and each frame in the time sequence corresponds to a different time instant).

The terms "object" and "structure component" are used synonymously in the context of an annotation tool refers to an identifiable piece of structure within the static 3D scene of a 3D frame which is modelled as an object. Note that under this definition, an object in the context of the annotation tool may in fact correspond to only part of a real-world object, or to multiple real-world objects etc. That is, the term object applies broadly to any identifiable piece of structure captured in a 3D scene.

Regarding further terminology adopted herein, the terms "orientation" and "angular position" are used synonymously and refer to an object's rotational configuration in 2D or 3D space (as applicable), unless otherwise indicated. As will be apparent from the preceding description, the term "position" is used in a broad sense to cover location and/or orientation. Hence a position that is determined, computed, assumed etc. in respect of an object may have only a location component (one or more location coordinates), only an orientation component (one or more orientation coordinates) or both a location component and an orientation component. Thus, in general, a position may comprise at least one of: a location coordinate, and an orientation coordinate. Unless otherwise indicated, the term "pose" refers to the combination of an object's location and orientation, an example being a full six-dimensional (6D) pose vector fully defining an object's location and orientation in 3D space (the term 6D pose may also be used as shorthand to mean the full pose in 3D space).

The terms "2D perception" and "3D perception" may be used as shorthand to refer to structure perception applied in 2D and 3D space respectively. For the avoidance of doubt, that terminology does not necessarily imply anything about the dimensionality of the resulting structure perception output - e.g. the output of a full 3D bounding box detection algorithm may be in the form of one or more nine-dimensional vectors, each defining a 3D bounding box (cuboid) as a 3D location, 3D orientation and size (height, width, length - the bounding box dimensions); as another example, the depth of an object may be estimated in 3D space, but in that case a single-dimensional output may be sufficient to capture the estimated depth (as a single depth dimension). Moreover, 3D perception may also be applied to a 2D image, for example in monocular depth perception. As noted, 3D object/structure information can also be extracted from 2D sensor data, such as RGB images.

### Example AV stack:

To provide relevant context to the described embodiments, further details of an example form of AV stack will now be described.

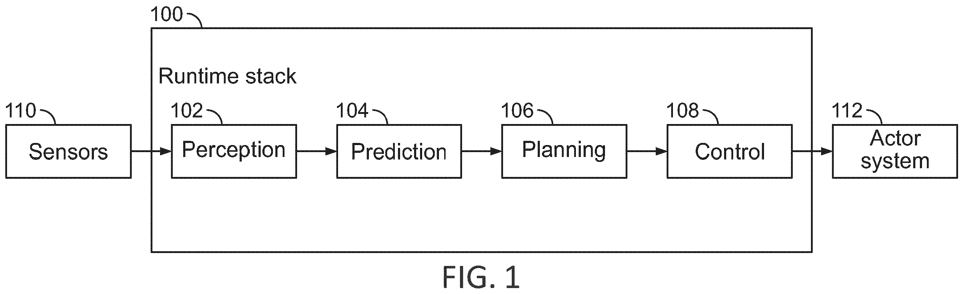

Figure 1 shows a highly schematic block diagram of an AV runtime stack 100. The run time stack 100 is shown to comprise a perception (sub-)system 102, a prediction (sub-)system 104, a planning (sub-)system (planner) 106 and a control (sub-)system (controller) 108. As noted, the term (sub-)stack may also be used to describe the aforementioned components 102-108.

In a real-world context, the perception system 102 receives sensor outputs from an on-board sensor system 110 of the AV, and uses those sensor outputs to detect external agents and measure their physical state, such as their position, velocity, acceleration etc. The on-board sensor system 110 can take different forms but generally comprises a variety of sensors such as image capture devices (cameras/optical sensors), lidar and/or radar unit(s), satellite-positioning sensor(s) (GPS etc.), motion/inertial sensor(s) (accelerometers, gyroscopes etc.) etc. The onboard sensor system 110 thus provides rich sensor data from which it is possible to extract detailed information about the surrounding environment, and the state of the AV and any external actors (vehicles, pedestrians, cyclists etc.) within that environment. The sensor outputs typically comprise sensor data of multiple sensor modalities such as stereo images from one or more stereo optical sensors, lidar, radar etc. Sensor data of multiple sensor modalities may be combined using filters, fusion components etc.

The perception system 102 typically comprises multiple perception components which co-operate to interpret the sensor outputs and thereby provide perception outputs to the prediction system 104.

In a simulation context, depending on the nature of the testing - and depending, in particular, on where the stack 100 is "sliced" for the purpose of testing (see below) - it may or may not be necessary to model the on-board sensor system 100. With higher-level slicing, simulated sensor data is not required therefore complex sensor modelling is not required.

The perception outputs from the perception system 102 are used by the prediction system 104 to predict future behaviour of external actors (agents), such as other vehicles in the vicinity of the AV.

Predictions computed by the prediction system 104 are provided to the planner 106, which uses the predictions to make autonomous driving decisions to be executed by the AV in a given driving scenario. The inputs received by the planner 106 would typically indicate a drivable area and would also capture predicted movements of any external agents (obstacles, from the AV's perspective) within the drivable area. The driveable area can be determined using perception outputs from the perception system 102 in combination with map information, such as an HD (high definition) map.

A core function of the planner 106 is the planning of trajectories for the AV (ego trajectories), taking into account predicted agent motion. This may be referred to as trajectory planning. A trajectory is planned in order to carry out a desired goal within a scenario. The goal could for example be to enter a roundabout and leave it at a desired exit; to overtake a vehicle in front; or to stay in a current lane at a target speed (lane following). The goal may, for example, be determined by an autonomous route planner (not shown).

The controller 108 executes the decisions taken by the planner 106 by providing suitable control signals to an on-board actor system 112 of the AV. In particular, the planner 106 plans trajectories for the AV and the controller 108 generates control signals to implement the planned trajectories. Typically, the planner 106 will plan into the future, such that a planned trajectory may only be partially implemented at the control level before a new trajectory is planned by the planner 106. The actor system 112 includes "primary" vehicle systems, such as braking, acceleration and steering systems, as well as secondary systems (e.g. signalling, wipers, headlights etc.).

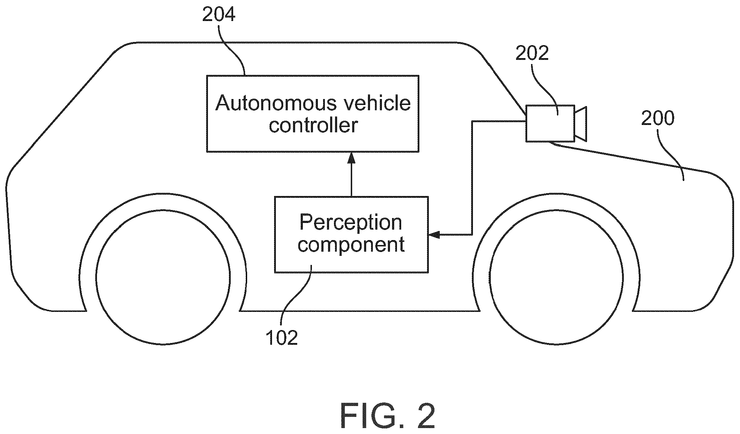

Figure 2 shows a highly-schematic block diagram of an autonomous vehicle 200, which is shown to comprise an instance of a trained perception component 102, having an input connected to at least one sensor 202 of the vehicle 200 and an output connected to an autonomous vehicle controller 204.

In use, the (instance of the) perception component 102 of the autonomous vehicle 200 interprets structure within perception inputs captured by the at least one sensor 202, in real time, in accordance with its training, and the autonomous vehicle controller 204 controls the speed and direction of the vehicle based on the results, with no or limited input from any human driver.

Although only one sensor 202 is shown in Figure 2, the autonomous vehicle 102 could be equipped with multiple sensors. For example, a pair of image capture devices (optical sensors) could be arranged to provide a stereoscopic view, and the road structure detection methods can be applied to the images captured from each of the image capture devices. Other sensor modalities such as LiDAR, RADAR etc. may alternatively or additionally be provided on the AV 102.

As will be appreciated, this is a highly simplified description of certain autonomous vehicle functions. The general principles of autonomous vehicles are known, therefore are not described in further detail.

Moreover, the techniques described herein can be implemented off-board, that is in a computer system such as a simulator which is to execute path planning for modelling or experimental purposes. In that case, the sensory data may be taken from computer programs running as part of a simulation stack. In either context, the perception component 102 may operate on sensor data to identify objects. In a simulation context, a simulated agent may use the perception component 102 to navigate a simulated environment, and agent behaviour may be logged and used e.g. to flag safety issues, or as a basis for redesigning or retraining component(s) which have been simulated.

### Ground truth pipeline

A problem when testing real-world performance of autonomous vehicle stacks is that an autonomous vehicle generates vast amounts of data. This data can be used afterwards to analyse or evaluate the performance of the AV in the real world. However, a potential challenge is finding the relevant data within this footage and determining what interesting events have occurred in a drive. One option is to manually parse the data and identify interesting events by human annotation. However, this can be costly.

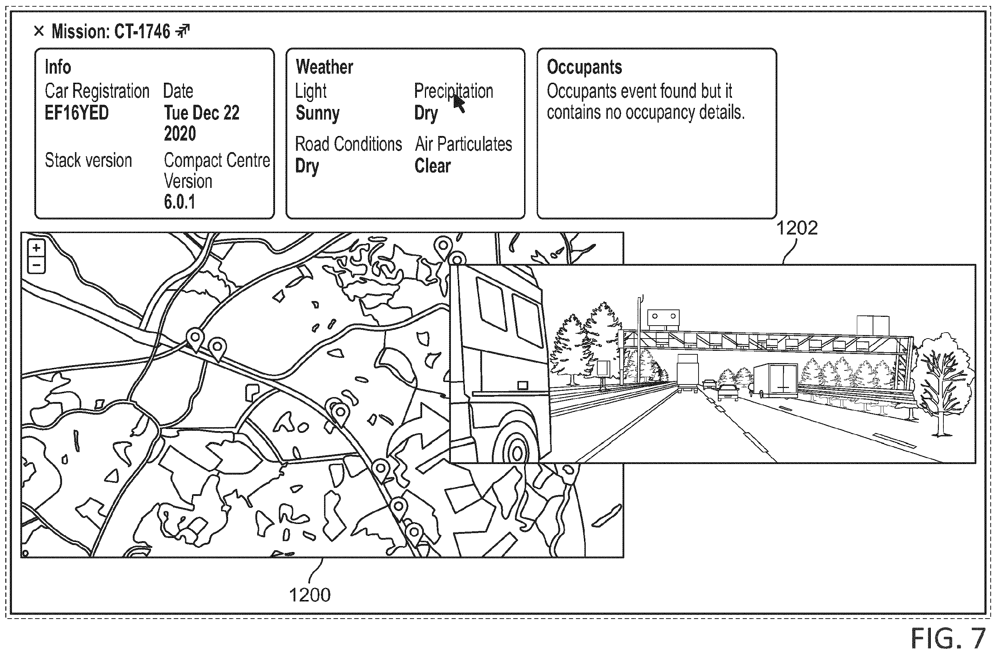

Figure 7 shows an example of manually tagging real-world driving data while driving. The AV is equipped with sensors including, for example, a camera. Footage is collected by the camera along the drive, as shown by the example image 1202. In an example drive with a human driver on a motorway, if the driver notes anything of interest, the driver can provide a flag to the AV and tag that frame within the data collected by the sensors. The image shows a visualisation of the drive on a map 1200, with bubbles showing points along the drive where the driver tagged something. Each tagged point corresponds with a frame of the camera image in this example, and this is used to filter the data that is analysed after the drive, such that only frames that have been tagged are inspected afterwards.

As shown in the map 1200, there are large gaps in the driving path between tagged frames, where none of the data collected in these gaps is tagged, and therefore this data goes unused. By using manual annotation by the ego vehicle driver to filter the data, the subsequent analysis of the driving data is limited only to events that the human driver or test engineer found significant enough, or had enough time, to flag. However, there may be useful insights into the vehicle's performance at other times from the remaining data, and it would be useful to determine an automatic way to process and evaluate the driving performance more completely. Furthermore, identifying more issues than manual tagging for the same amount of data provides the opportunity to make more improvements to the AV system for the same amount of collected data.

A possible solution is to create a unified analysis pipeline which uses the same metrics to assess both scenario simulations and real world driving. A first step is to extract driving traces from the data actually collected. For example, the approximate position of the ego vehicle and the approximate positions of other agents can be estimated based on on-board detections. However, on-board detections are imperfect due to limited computing resources, and due to the fact that the on-board detections work in real-time, which means that the only data which informs a given detection is what the sensors have observed up to that point in time. This means that the detections can be noisy and inaccurate.

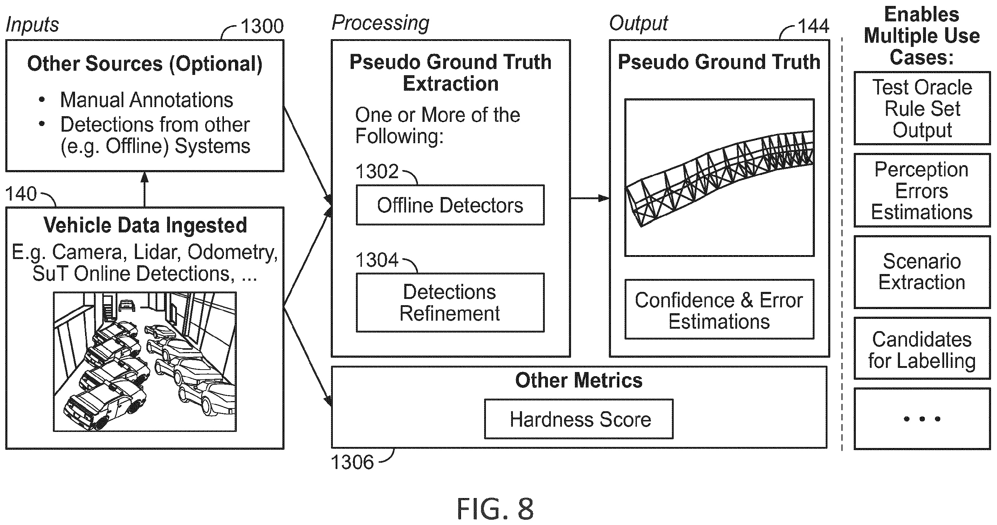

Figure 8 shows how data is processed and refined in a data ingestion pipeline to determine a pseudo ground truth 144 for a given set of real-world data. Note that no 'true' ground truth can be extracted from real-world data and the ground truth pipeline described herein provides an estimate of ground truth sufficient for evaluation. This pseudo ground truth may also be referred to herein simply as 'ground truth'.

The data ingestion pipeline (or 'ingest' tool) takes in perception data 140 from a given stack, and optionally any other data sources 1300, such as manual annotation, and refines the data to extract a pseudo ground truth 144 for the real-world driving scenarios captured in the data. As shown, sensor data and detections from vehicles are ingested, optionally with additional inputs such as offline detections or manual annotations. These are processed to apply offline detectors 1302 to the raw sensor data, and/or to refine the detections 1304 received from the vehicle's on-board perception stack. The refined detections are then output as the pseudo ground truth 144 for the scenario. This may then be used as a basis for various use cases, including evaluating the ground truth against driving rules , determining perception errors by comparing the vehicle detections against the pseudo ground truth and extracting scenarios for simulation. Other metrics may be computed for the input data, including a perception 'hardness' score 1306, which could apply, for example, to a detection or to a camera image as a whole, which indicates how difficult the given data is for the perception stack to handle correctly.

### Combined Refinement Pipeline

Various types of offline detectors and detection refinement methods can be used within a 'ground truthing' pipeline as described above, to generate annotations for objects in a scene, either to train improved perception components or for comparison with a set of detections for the purpose of testing, as described above. These offline detectors and detection refinement techniques may be applied to generate annotations based on sensor data from different sensor modalities, such as camera images, radar, lidar, etc. A combined detection refinement technique will now be described which exploits knowledge about the shape of the object to be detected, knowledge of the motion of the object, and data from multiple sensor modalities to obtain a more accurate estimate of the shape, location and orientation of the object throughout a scenario spanning multiple frames of captured data.

A shape and pose (i.e. location and orientation) of a given object is refined by providing some initial approximation of the shape and pose (the initialization), and optimising the parameters defining the shape and pose of the object so as to minimise some cost function encoding the prior knowledge about the object as well as the available sensor data in order to generate an improved estimate. The initial the shape and poses could be from an on-board detector, in which case the present techniques fall in the category of detection "refinement". Alternatively, some other offline process could be used to initialize the shape and poses, in which case the techniques falls under the umbrella of offboard detection.

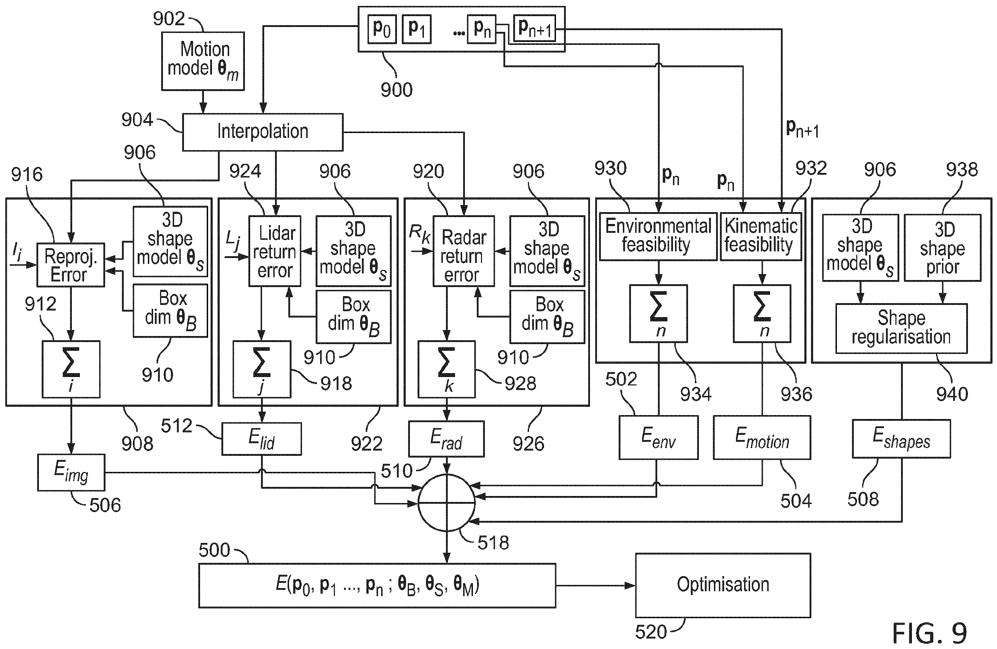

To generate 3D bounding box annotations, for example, size parameters **θ_{B}** = (H, W, D) for the bounding box should be defined, as well as a six-dimensional pose **p*ₙ***, comprising a location in 3D space defined by three location parameters, and a 3D orientation defined by three orientation parameters. To model the object's shape within the bounding box, a 3D shape model is used, defined by shape parameters **θ*_{S}***. Different shape models may be defined, and examples of shape models will be discussed in further detail below. The shape parameters, pose parameters and size parameters are optimised by minimising a cost function 500. Figure 9 shows a block diagram of a cost function defined with respect to an object model - itself defined by a set of shape parameters **θ*_{S}*** and bounding box size parameters **θ*_{B}*** - and pose parameters (**p₀**, ..., ***pₙ***). In this example, the object model assumes that the size and the shape of the object is constant in time, and therefore a single set of shape parameters **θ*_{S}*** and size parameters **θ*_{B}*** are determined for a time series of sensor data in which the object is captured, where the pose of the object is changing in time, and thus a pose vector **p*ᵢ*** is determined for each timestep i of the time series corresponding to a captured frame for at least one sensor modality. The values of the shape, size and pose parameters may be adjusted so as to minimise a total error function 500 comprising multiple terms based on the available sensor data as well as shape and motion models. The optimisation may be performed using gradient descent methods, wherein the parameters are updated based on a gradient of the total error 500 with respect to the model parameters.

In some embodiments the shape and size of the object may be encoded fully by a single set of shape parameters **θ*_{S}***. In this case, the object is defined by the shape **θ*_{S}*** and pose p. An example shape model encodes both shape and size information in a set of parameters defining a signed distance field of an object surface. This is described later.

A set of values for the pose parameters 900 (**p₀**, ..., **p*ₙ***) may initially be provided by one or more vehicle detectors which correspond to a subset of timesteps for which sensor data is available, and these poses nay be refined iteratively in an optimisation as shown in Figure 9. For example, a vehicle detector may provide a set of poses corresponding to the position and orientation of an object within a time series of camera image frames used by the detector. Alternatively, an initial set of poses can be generated offline based on sensor data from one or more modalities. As described above, the offline detection and detection refinement techniques of the refinement pipeline may receive data from multiple sensor modalities, including, for example, lidar and radar returns as well as camera images. However, these sensor measurements may not correspond directly in time to the initial poses from the detector. In this case, a motion model 902 defined by one or more motion model parameters *θ_{M}* may be used to interpolate the estimated poses corresponding to the original detections in order to obtain intermediate poses corresponding to sensor measurements between the pose estimates. The interpolation is only used to the extent that the poses are not aligned in time with sensor measurements. For example, the poses 900 may align in time with a time series of image frames, but time series of radar and lidar points are also available which do not align with these poses. In this case, the interpolation is used to determine estimated poses that align with the lidar and radar measurements only. The intermediate poses are used in the refinement process within respective error models for the different sensor modalities. This is described in more detail below. The motion model may be based on assumptions about the motion of the objects being detected; for example, one possible choice of motion model for vehicles is a constant curvature and acceleration model.

An initial estimate of the object shape and size parameters **θ*_{S}*** and **θ*_{B}*** may be generated from online or offline detections, or an average shape and size may be provided based on a dataset of objects, which can be used as an initial shape and size. This requires knowledge of the object class, which is determined from an object classifier applied online or offline.

In the example model shown in Figure 9, available sensor data includes 2D image frames *Iᵢ* ∈ {*I*₀, *..., I_{I}*}, lidar measurements *Lⱼ* ∈ {*L*₀, *..., L_{J}*}, and radar measurements *Rₖ* ∈ {*R*₀, *..., R_{K}*}. As mentioned above, the pose parameters 900 do not necessarily coincide with the times of all sensor measurements. However, the interpolation process 904 provides a set of estimated intermediate poses for the current values of the pose parameters 900, giving an estimated intermediate pose for each respective sensor measurement.

The optimal set of pose and shape parameters should be consistent with knowledge of the object's shape or pose obtained directly from sensor data. Therefore, a contribution to the error function 500 is provided for each available sensor modality. Note that some sensor modalities cannot be used alone to derive an estimate for the pose or shape parameters. For example, radar data is too sparse on its own to provide an estimate of the pose or shape of an object, and cannot be used to determine a 3D shape since radar systems only give an accurate spatial location in 2 dimensions, typically a radial distance in an X-Y plane (i.e. a bird's eye view) and no height information.

An image error term *E_{img}* is computed by an image processing component 908, and encourages consistency between a time series of camera images *Iᵢ* and the shape and pose parameters **θ*****_{S}**,* **θ*_{B}***, **p**. The set of poses corresponding with the time series of images is received, along with a current set of shape model parameters **θ*_{S}*** and a set of box dimensions **θ*_{B}*.** Although not shown in Figure 9, the image processing component 908 may also receive camera data enabling the pose of the camera and the image plane to be identified. Together, these parameters provide a current model of the object in 3D. The 3D model of the object is projected into the image plane, which requires knowledge of the camera pose and focal length. The projected model is compared with features of the 2D image *Iᵢ*, and a reprojection error 916 is computed, which is aggregated over all camera images *Iᵢ* of the time series to generate an 'image' error term *E_{img}* 506 comprising the aggregate reprojection error.

The reprojection error is computed by comparing the reprojected model with features extracted from the image. In one example image-based method referred to herein as semantic keypoint refinement, a set of semantic keypoints corresponding to features of the class of the object to be modelled, such as headlights or wheels for vehicles are defined, and the shape model 906 define a relative location of each keypoint within a 3D bounding box, the box dimensions 910 define the size of the bounding box, and the bounding box pose 900 provides the bounding box location and orientation. This combined with knowledge of the camera pose defines a set of 3D locations for the 3D semantic keypoints. Separately, a 2D semantic keypoint detector may be applied to the 2D image frame to determine a 2D location in the image plane of the semantic keypoints. The reprojection error 916 is then computed as a distance measure aggregated over the reprojected 3D semantic keypoints and the detected keypoints. This method is described in further detail later. Other image-based methods may use different features of the image to compute the reprojection error 916.

Semantic keypoints are an important connect in computer vision. Semantic keypoint are semantically meaningful points on an object, and a set of such keypoints provides a concise visual abstraction of the object. Details of a semantic keypoint detection algorithm that can be used in this context may be found at https://medium.com/@laanlabs/real-time-3d-car-pose-estimation-trained-on-synthetic-data-5fada2c16634, "Real time 3d car pose estimation trained on synthetic data" (Laan Labs), A convolutional neural network (CNN) detector is trained to detect fourteen vehicle semantic keypoint types: upper left windshield, upper right windshield, upper left rear window, upper right rear window, left back light, right back light, left doorhandle, right doorhandle, left front light, right front light, left front wheel, right front wheel, left back wheel, right back wheel. The (x,y) location of each semantic keypoint is estimated within the image plane (probabilistically, as a distribution over possible keypoint locations), which in turn can be mapped to the corresponding 3D semantic keypoint of the same type within the 3D object model.

The reprojection error 916 is aggregated over the time series of image frames in an aggregation 912 which is provided as an image error term *E_{img}* to the total cost function 500.

A lidar processing component (error model) 922 may also be used within the shape and pose optimisation when lidar data is available. In this case, a time series of lidar measurements *Lⱼ* are collected for a set of lidar signal returns received at timesteps *j.* As above, these do not necessarily correspond to timestamps at which other sensor measurements occurred or to the times at which the poses 900 are available, although after interpolation, a set of intermediate poses {**p*ᵢ***} corresponding to the lidar measurements are generated. As described above, lidar measurements may be taken by performing a sweep over a short time interval and treating all lidar measurements generated in that sweep as measurements corresponding to the same time interval, to obtain a denser point cloud in which to capture 3D structure. However, in this case each timestep i corresponds with a time instant at which an individual lidar measurement occurred and a lidar error is computed for each measurement before aggregating over the full time series. As described above for the camera image data, a 3D shape model 906, bounding box dimensions 910 and poses 900 may be used to determine an estimated model of the object in 3D space. For example, the shape model may provide parameters defining a 3D surface which may be represented by a signed distance field (SDF). In this case, a lidar error 924 may be based on a point-to-surface distance from the lidar measurement, which is a point in 3D, and the current 3D model of the object. The lidar error 924 is aggregated in a sum 918 over the time series of lidar measurement to get the total point to surface distance of all captured lidar measurements to the estimated surface of the model at the timepoint at which each respective measurement was made. This aggregated sum is provided as a lidar error term *E_{lid}* 512 to the optimisation 520.

A radar processing component (error model) 926 may also be used. Radar allows measurement of a radial distance of objects from the radar transmitter as well as a radial velocity of said objects along the line of transmission using the Doppler effect. This velocity measurement may be referred to herein as a 'Doppler velocity'. The shape and pose estimate of the object being modelled, according to the shape, size and pose parameters, in combination with the motion model 902, provides an estimate of the state of the object, i.e. its velocity and acceleration at each timestep corresponding to the original poses, while the interpolation 904 provides a velocity and acceleration corresponding to all intermediate timesteps. As above, a 3D model of the object in 3D space may be estimated from the current pose, shape and size parameters.

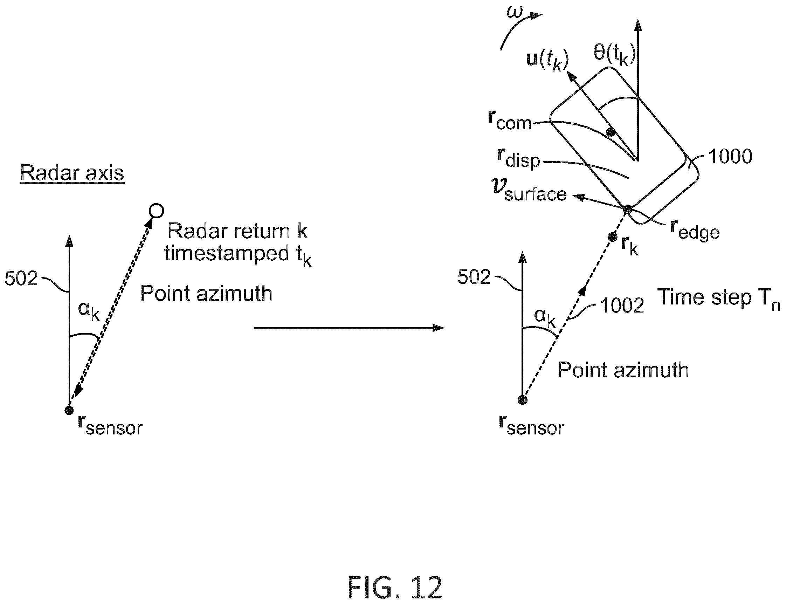

A radar error 920 is based on inconsistencies between the 3D model and a time series of radar measurements *Rₖ*, which comprise radial distance measurements and Doppler velocities at the times of the radar signal's return to the radar sensor. Radial distances are compared with a projection of the 3D model into the 2D plane viewed from the top down. The radial distance measurement allows a location of the point measured within a top-down 2D view, and a measure of distance of this point to a projected surface of the 3D object model may be computed for the poses which coincide in time with radar measurements. As mentioned above, these may be interpolated from an original set of poses 900. The radar error 924 also comprises a term measuring the consistency of the estimated radial velocity of a point on the object based on the current model parameters with the measured Doppler velocity *vₖ*. This varies based on the pose of the object, i.e. if the current object model suggests that the radar measurement hit the side of the vehicle, but in fact the radar signal hit the rear window, the observed Doppler velocity will differ from what is expected. The determination of an expected Doppler velocity is described in more detail below with reference to Figure 12. The radar error 920 may compute an aggregation of error for both radial distance and radial velocity, and this may be aggregated by an aggregation operation 928 over all timesteps k for which radar measurements are available. This aggregation provides a radar error term *E_{rad}* 510 to the optimisation.

Any other sensor data available may be incorporated into the optimisation by applying a measure of consistency between sensor measurements and the object model. For example, stereo camera pairs may be used to obtain 3D stereo depth information, which may be compared with the object model in 3D space in a similar way to that described for radar and lidar above.

In addition to consistency with measured data, knowledge of the behaviour of the object to be modelled may be used to refine the estimated shape and pose over time. For example, for vehicles, many assumptions may be made about the position and motion of the vehicle in time.

A first 'environmental feasibility' model 930 may provide an error penalising deviations from the expected interaction of the object with its environment. This error may aggregate multiple penalties encoding different rules about the object's behaviour in its environment. A simple example is that a car always drives along a road surface, and therefore a model of a vehicle should never place the vehicle such that it sits significantly above or below the height of the road surface. An estimate of the road surface in 3D may be generated by applying a road surface detector, for example. An environmental feasibility error 930 may then apply a measure of distance between the surface on which the wheels of the car as currently modelled would rest and the road surface as estimated from a road surface detector. The points at which the wheels touch the road surface are approximated based on the current estimate of the object's shape and pose. This may be aggregated over all timesteps for which poses are being optimised in an aggregation 934, and the aggregated environmental feasibility error may be provided as an environmental error *Eₑₙᵥ* to the optimisation 520.

A 'kinematic feasibility' model 932 may enforce consistency of the modelled object shapes and poses with known principles of motion for the object being modelled. For example, cars in ordinary driving conditions follow relatively smooth curved paths, and it would be kinematically infeasible for a car to suddenly jump sideways, or even to move sideways very sharply if it is accelerating forward in its current trajectory. Different motion models may encode knowledge about the feasible motion of a vehicle, such as a constant curvature and acceleration model. A kinematic feasibility error 932 may be defined which takes each consecutive pair of poses of the estimated object model and checks that the motion of the vehicle between these two poses is realistic according to whatever rules of motion have been defined. The error may be based on a full motion model, such as the constant curvature and acceleration model mentioned above, or it may be based on rules, for example an error may be defined that penalises when the average acceleration required to get from one point to another is above a certain threshold. The kinematic feasibility model 932 may be the same as the motion model 902 used to interpolate the estimated poses.

A shape regularisation term may be used to enforce consistency of the shape model with some prior knowledge of what the shape of the object should be. For example, in the semantic keypoint refinement mentioned above, the locations of the 3D semantic keypoints within the bounding box defining the object, i.e. the fact that the left front headlight should always be approximately at the lower left and front of the bounding box can be incorporated by an error term penalising inconsistency between the current estimate of the object's shape model (in this case, the locations of the set of keypoints within the object bounding box) and the expected shape of the object according to the model. For semantic keypoints, the expected location of each keypoint may be represented by a 3D Gaussian distribution, and a shape regularisation term 940 may be based on the probability of the modelled object keypoints under the respective probability distributions, where a less probable position would be penalised more heavily than a position close to the centre of the Gaussian. In general, a shape regularisation term 940 may be used to enforce consistency with any assumptions about the object's shape that have not been already encoded in the definition of the shape model. For some objects, it will be assumed that the shape of the object does not vary in time, and therefore only a single set of shape parameters need to be learned. However, deformable object models may be defined, where the shape of the object may change in time, and in this case, a separate shape regularisation may be applied to the modelled shape for each timestep and this may be aggregated over the full time series of poses 900.

The shape regularisation term determines a shape error *Eₛₕₐₚₑ* 508 which may be included in the total error 500 to be minimised. Some models may fully encode any prior knowledge about the object class's shape in the parameters of the shape model 906 itself, and therefore do not require a shape regularisation term 940. An example model uses DeepSDF or PCA to learn a small parameter space defining a 3D surface of an object, based on data comprising example objects of the class of object to be modelled. In this case, the shape parameters themselves encode statistical properties of object shape.

The total error 500 may be obtained by an aggregation 518 of the error terms for the different modalities described above. For modelling a rigid body, the shape and size parameters are assumed not to change, so a single set of shape ***θ_{S}*** and size **θ*_{B}*** are learned, while a different pose p is learned for each of a set of timesteps. For a deformable model, the shape parameters can change over time, and a set of shape parameters at different times can be learned. Semi-rigid bodies may be modelled as a combination of rigid objects with constraints on their relative motion and pose based on physically plausible motion.

The aggregation 518 may be weighted to give greater importance to some modelling constraints or assumptions. It should be noted that no individual error term imposes a hard constraint on the shape and pose parameters, and that in the full optimisation of the total error 500, each error term encourages the eventual shapes and poses to satisfy 'soft' constraints on consistency with prior knowledge about shape and motion and consistency with observed sensor data. The parameters defining the object model, i.e. the shape **θ*****_{S}**,* size **θ*_{B}*** , motion **θ***_{M}* and pose p parameters may be iteratively updated as part of an optimisation process 520 in order to minimise this total error. This update may be based on gradient descent, wherein the gradient of the error function 500 is taken with respect to each parameter *θ_{µ}* to be updated, and the parameter *θ_{µ}* is updated as follows: ${θ}_{μ} ← {θ}_{μ} - η \frac{\partial E}{\partial {θ}_{μ}} ,$ where *η* is a learning rate defining the size of the update at each optimisation step. After the parameters are updated, the error and the gradients may be recomputed and the optimisation may continue until convergence to an optimal set of parameters.

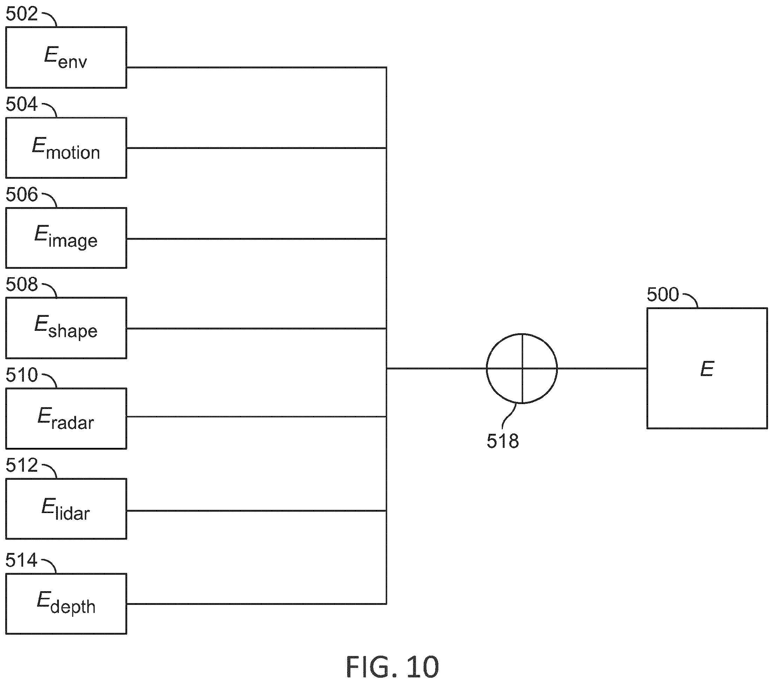

Figure 10 shows a simplified block diagram of the cost terms which may be included in the cost function to be optimised (this may also be referred to herein as an error function E) in order to determine a 3D model of an object, for which 2D image data, depth data (for example from stereoscopic imaging, or from applying depth extraction techniques to a 2D monocular image), lidar point clouds and radar measurements have been captured. Note that this is an illustrative example for a set of possible sensor modalities for which data may be available. The techniques described herein may be used with data from any set of two or more sensor modalities. In addition to the described sensor data, prior knowledge about the class of object to be annotated may be used, for example, existing knowledge about the shape of that object type, knowledge of how that object may be expected to move, and knowledge about where such an object may be located within its environment.

Each of these knowledge sources and sensor modalities may be incorporated into a single error function, based on which the optimisation of the shape and pose model parameters may be performed. Figure 10 shows how a single error function 500 may be constructed from individual error terms corresponding to the different sensor modalities and different sources of prior knowledge. This error function is defined over a particular period of time, spanning a plurality of frames in the sensor data, and the parameters defining the shape and pose of the object are optimised so as to minimise the total error for the given time period.

An environmental cost term 502, denoted *Eₑₙᵥ,* which is defined so as to penalise bounding boxes which deviate from the expected relationship between the given object type and its environment. This term may encode, for example, the fact that cars move along the plane of the ground and therefore should not appear elevated from the road surface, where the road surface may be determined by a respective detector.

A motion error term 504, denoted *Eₘₒₜᵢₒₙ*, encodes a model of expected motion for the given class of object. In the example case of vehicles, a motion model may be defined which encodes the fact that vehicles typically move along a relatively smooth trajectory and do not suddenly jump from one lateral position to another in a discontinuous way. The motion cost term may be computed pairwise over consecutive frames, in order to penalise unrealistic movement from one frame to another.

An image error term 506, denoted *E_{image},* is defined so as to penalise a deviation between what is captured in the camera image data and the estimated object annotation. For example, an estimated 3D bounding box may be projected into an image plane and compared with the 2D camera image captured at the corresponding time step. In order to compare the 2D image to the projection of the 3D bounding box in a meaningful way, some knowledge of the object in the 2D image must be available, such as a 2D bounding box obtained by a bounding box detector. In this case, *E_{image}* may be defined so as to penalise deviations between the projection of the 3D bounding box into the image plane and the detected 2D bounding box. In another example, as mentioned above, the 3D shape model 906 may be defined by a set of 'semantic keypoints' and the image error term 506 may be defined as a deviation between a projection of the estimated keypoints within the estimated bounding box into the 2D image plane, and a set of 2D semantic keypoints determined from the 2D image by applying a 2D semantic keypoint detector. More details of a semantic keypoint refinement technique will be described later.

A shape error term 508, denoted *Eₛₕₐₚₑ,* is defined so as to penalise deviations between the shape defined by the annotation parameters and an expected shape of the object to be annotated. There are multiple possible ways to encode shape information into a shape model. As mentioned above, the shape error term 508 is not required as part of the overall error 500 to be optimised, but an implementation of the present techniques should include prior knowledge about the object shape in either the error function 500 or in the definition of the parameters to be fit to define the shape and pose of the object.

A radar error term 510, denoted *E_{radar},* may be included where radar data for the given scenario is available, which penalises a deviation between the observed radial velocity of a part of the object based on a captured radar measurement and the expected radial velocity of the same point of the object computed based on the estimated object shape, pose and linear velocity. In a driving context, the pose and linear velocity of a radar sensor on the ego vehicle is known, for example from odometry. The radar error term may be useful in refining both the shape and the pose of the object, since the observed radial velocity being very different to the expected value based on the estimated shape, pose and linear velocity of the object is an indication that the radar signal hit the object at a different angle to that defined by the estimated state, and that the estimated pose or the need to be adjusted. Similarly, if the radar path intersects with what is estimated, based on the current shape model, to be the front registration plate of a vehicle, but in fact it hits the front wheel, the expected radial velocity will deviate significantly from what is observed. The parameters of the object model may be adjusted to correct the shape and pose until the expected radial velocities and the measured velocities are approximately consistent, subject to the other error terms to be optimised.

A lidar error term 512, denoted *E_{lidar},* may be defined where lidar point cloud data for the given scenario is available. This error term should be defined so as to penalise deviations between the surface of the object as defined by the current estimated shape and pose and the measurement of lidar points corresponding to the object in the captured lidar data. Lidar gives a set of points in 3D relative to the lidar sensor representing a 3D structure based on the time taken for a laser signal to be reflected back to a receiver. Where the transmitter and receiver location is known, it is therefore straightforward to determine a location for each lidar point, forming a point cloud in 3D. A lidar error may therefore calculate an aggregate distance measure between the estimated surface of the object according to the current estimate of the shape and pose of the object and the set of lidar point, aggregated over lidar measurements and 3D object surfaces for each lidar frame in a time series of frames.

A 'depth' error term 514, denoted *E_{depth}* may be defined where other 3D data is available for the given image, for example a stereoscopic depth map obtained from a stereoscopic image pair, or a 'stereo' point cloud derived from one or more stereo depth maps, or alternatively a 'mono' depth map or point cloud obtained by applying a depth extraction model to a 2D monocular image. As described above for a lidar point cloud, a depth error term may penalise deviations between the 3D depth information from the given sensor modality and the expected depth of the object based on the current estimate of the object shape and pose.

The error function E may be formulated as a sum of all the error cost functions described above over all frames of the given scenario in which the object is to be modelled.

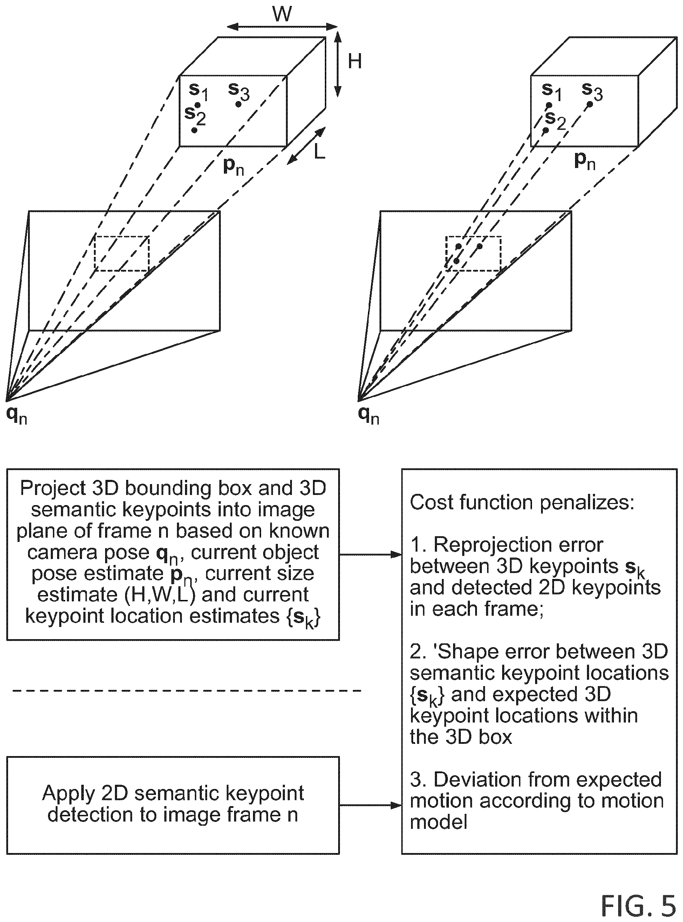

As mentioned above, offline refinement may be performed by optimising parameters of an object model defining the object's shape and pose based on a subset of the cost functions shown in Figure 5, depending on the choice of object model defining shape and pose, as well as the data available for different sensor modalities. The refinement techniques described herein use at least two sensor modalities and optimise the pose of the object over a period of multiple timesteps. Note that an estimated shape and pose is initialised for every measured frame of all sensor modalities. An initial shape and pose estimate may be based on a vehicle detector's outputs based on a single sensor modalities, and in the case that this is only available at timesteps corresponding to measurements for that sensor modality, initial shape and pose data for intermediate timesteps may be obtained by interpolating between detections.

The shape model 906 and/or shape regularising term above, may incorporate knowledge of the class of the object to be modelled. For example, multiple possible shape models 906 may be defined, each corresponding to a different object class from among a set of possible object classes. Similarly multiple shape priors 938 may be defined, each corresponding to a different one of a set of possible object classes. An object classifier may be applied to sensor data from one or more sensor modalities to determine the class of the object to be modelled, and this may be used to select a shape prior and/or shape model as appropriate.

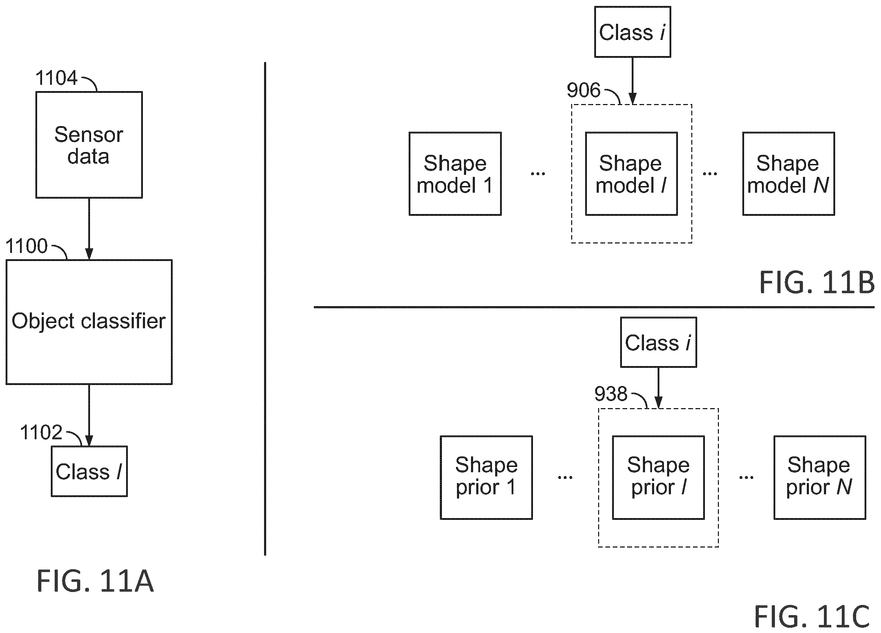

This is shown in Figures 11A-C. Figure 11A shows an object classifier 1100 which takes as input sensor data 1104 in which the object to be modelled is captured. This could comprise the time series of image frames *Iᵢ*, for example. An object class 1102 is output by the object classifier 1100 from a set of N possible classes. The object classifier may be implemented online within a vehicle detector, and the object class 1102 in this class is received as part of the vehicle detections referred to above for initialising the poses 900. Alternatively, the object classifier may be applied offline as part of the refinement pipeline to determine the object class 1102 from available sensor data containing the object.

Figure 11B shows how the determined object class is used to select the shape model 906 used in the cost function described above. A set of N possible shape models are defined, each corresponding to one of the possible object classes. For the semantic keypoint example, for a 'car' class, the corresponding shape model may define a set of keypoint positions corresponding to features of a car, such as a front headlight, front wing mirror, etc. A second 'pedestrian' class may have as a corresponding shape model a set of keypoint position parameters corresponding to body parts such as 'head' 'right foot', etc. Similarly, for the SDF example mentioned above, a different latent space is learned for each class of the set of possible classes, such that a 'pedestrian' class has a shape model with a set of parameters defining an expected 3D surface for humans, while a 'car' class has a corresponding shape model with a set of parameters defining an expected 3D surface for cars. For the determined object class *l* , the corresponding shape model *l* is used as the shape model 906 for the optimisation described above.

Figure 11C shows how the determined object class is used to select a shape prior 938 for the shape regularisation 940 described above. For the semantic keypoints example described above, a shape prior for a given class is a distribution based on the statistics of the keypoints in observed data for that class. For a 'car' class, a corresponding shape prior is learned based on the relative 3D locations of the keypoints within a dataset of cars. For a pedestrian class, a pedestrian shape prior might be learned by analysing the 3D locations of 'pedestrian' keypoints in a set of 3D pedestrian representations. Once a class *l* is determined for the object to be modelled, the shape prior corresponding to that class is selected to be used as the shape prior 938 within a shape regularisation term as described above.

### Semantic Keypoints

A first possible technique that uses prior knowledge about the shape of the objects to improve pose and shape estimation is based on the concept of 'semantic keypoints'. According to this technique, a 2D keypoint detector may be trained to predict a set of semantic keypoint locations or probability distributions over possible keypoint locations within a 2D image, and a 3D bounding box detector may be optimised to predict the pose and shape of the object based on the predicted keypoints of the 2D image and a prior assumption about the distribution of keypoints for objects of the given object class.

The description below refers to both a 'world' frame of reference and an object frame of reference. The pose of an object in a 'world' frame of reference simply means a position relative to some reference point which is stationary with respect to the environment. A moving vehicle's position, and the position of any individual feature of the vehicle is continuously changing in a world frame of reference. By contrast, the object frame of reference refers to the position of a given feature or point within a frame in which the object itself is stationary. In this frame, anything which is moving at the same velocity as the vehicle is stationary in the object frame of reference. A point which is defined within the object frame of reference can only be determined in the world frame of reference if the state of the object frame relative to the world frame is known.

A semantic keypoint detection method will now be described for an offline detector of an AV stack, which predicts a shape and pose in 3D for vehicles in a driving scenario. This may be implemented as part of a refinement pipeline, as described above. A 2D semantic keypoint detector may be trained which predicts a set of 2D keypoint locations, or distributions over possible keypoint locations on the 2D image. A 3D bounding box containing a set of estimated 3D semantic keypoints is then fit, by fitting a projection of the 3D keypoints into the image plane to the original 2D detected keypoints and fitting the 3D estimated keypoints to a semantic keypoint model encoding knowledge about the relative layout of the chosen set of keypoints within the bounding box. This is used to optimise the size and pose of a 3D bounding box in the world frame of reference, as well as the positions of the semantic keypoints within the box. A model of semantic keypoints is first defined for the object class, which in this case is cars. Multiple keypoint models may be defined, and the relevant model may be chosen based on an object class output by a 2D detector, for example.

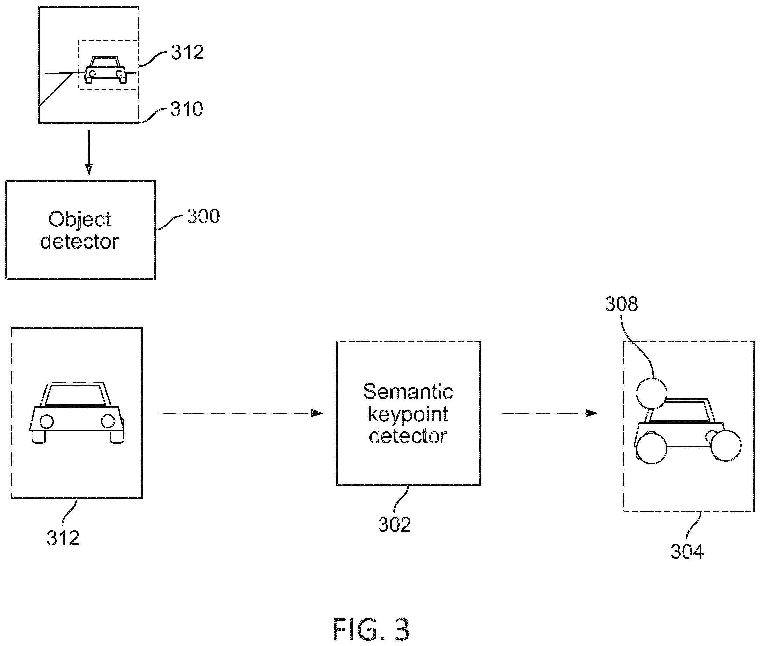

Figure 3 is a schematic block diagram showing how a semantic keypoint detector 302 may be used to predict the location of a set of semantic keypoints for a car within 2D camera images. First, a 2D object detector 300 may be used to crop the image 310 to the area of interest 312 containing the object to which the keypoint detection should be applied. The cropped area may be obtained by applying padding to a detection to increase the likelihood that the object is fully captured within the cropped area. A 2D semantic keypoint detector may then be applied to each cropped frame 312 from a time series of frames. Each 2D frame may be captured by a 2D camera 202. Typically one or more cameras are mounted to the ego vehicle to collect these images on a real-world driving run. Note that an object detector is not necessary where a semantic keypoint detector is trained on full images, and this process assumes that the semantic keypoint detector is configured to be applied to cropped images.

The semantic keypoint detector may be implemented as a convolutional neural network, and may be trained on real or synthetic data comprising 2D image frames annotated with the locations of the defined semantic keypoints. The convolutional neural network may be configured to output a heatmap for each semantic keypoint, the heatmap displaying a classification probability for the given semantic keypoint across the spatial dimensions of the image. The semantic keypoint detector acts as a classifier, where for each pixel, the network predicts a numerical value representing the likelihood of that pixel containing the semantic keypoint of the given class. Gaussian distributions may be fit to each heatmap to obtain a set of continuous distributions in 2D space for the respective keypoints. The output of the semantic keypoint detector 302 is therefore a 2D image overlaid with a set of distributions 308, each distribution representing a position of a keypoint within the 2D plane of the image.

However, the positions of the detected keypoints in 3D are unknown after applying semantic keypoint detection to a set of 2D images individually. As described above, the goal is to determine a set of 3D bounding boxes defining the location and pose of the object in time. A statistical model of the relative layout of the selected semantic keypoints may be determined by analysing a dataset containing multiple examples of the object class to be modelled. A Gaussian distribution in 3D may then be determined for each semantic keypoint based on where that keypoint appears within the 3D object data. To obtain an initial estimate of the relative position of the detected keypoints in 3D, the mean semantic keypoint locations may be selected. In the optimisation described herein, the fitting of the 3D semantic keypoints using both a reprojection error into a 2D image plane for each frame and an error penalising deviation from an expected relative layout of semantic keypoints over all frames, allows a 3D reconstruction of the object to be built up over multiple frames. This may be referred to herein as structure from motion (SfM).

Note that other shape priors may be used for semantic keypoints. For example, a latent space defining an object surface in 3D may be learned from data. This can be used as a shape prior for semantic keypoints, since the semantic keypoint locations are known with respect to the surface prior. In this case, in place of using a regularising term, the semantic keypoint locations are fully constrained with respect to the surface model, and the parameters of the surface model are varied so as to minimise the reprojection error with detected keypoints as described above.

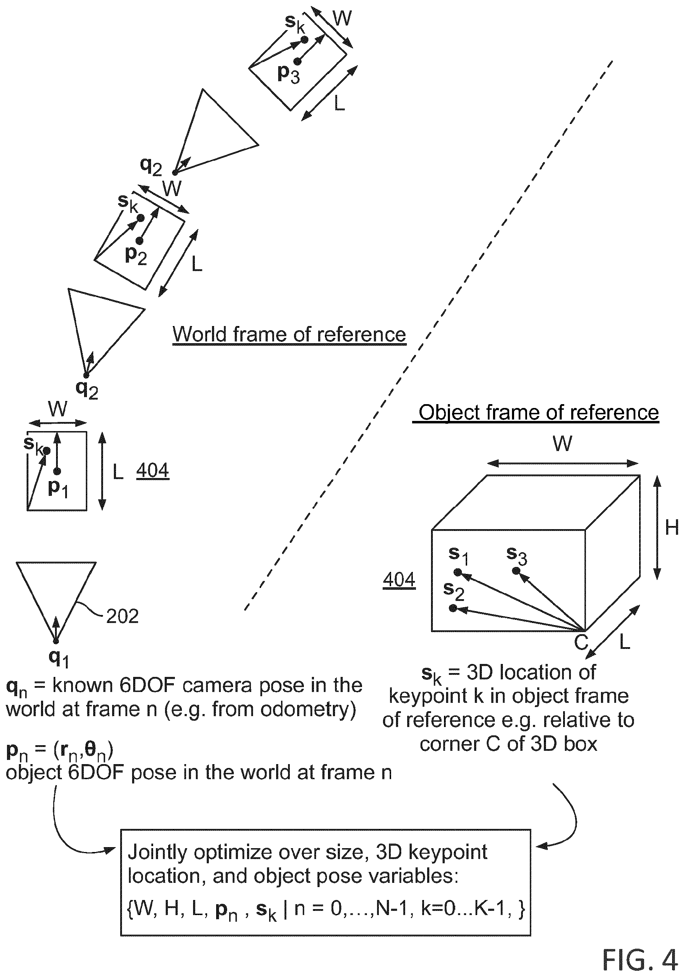

Figure 4 shows how a set of estimated 3D semantic keypoints may be represented in 3D within an object frame of reference, within a bounding box defining the object size, and reconstructed within a world frame of reference, based on structure from motion. Normally, SfM would apply to images of structure that is static in the world frame of reference, captured from a moving camera 202. The structure would be reconstructed in 3D simultaneously with the 3D camera path. A difference here is that a camera pose **q*ₙ*** having six degrees of freedom (3D location + 3D orientation), defined in the world frame of reference, is known for each frame n (for example via odometry), but the object itself is moving in the world. However, a set of points triangulated by structure from motion only provides the locations of the points relative to the reference frame of the object itself and does not provide a position in the world frame. Since the camera pose is known, and an estimated position of the points relative to the camera is also known after SfM is applied, the estimated position of the points can be mapped back to a world frame. Odometry techniques may be applied to determine the camera location and pose at the time of capturing each frame.

An initial cuboid 404 may be defined with an initial set of semantic keypoints **s*ₖ***. The parameters defining the dimensions and pose of the cuboid as well as the position of the semantic keypoints within the cuboid are optimised to determine a shape and pose of the object over the set of frames. The initial position and pose of the cuboid may be determined based on a 3D detection of the object for that frame, for example from a 3D detector used by the perception stack to predict 3D bounding boxes based on lidar point cloud information in combination with 2D camera images. An initial set of semantic keypoints **sₖ** may be selected, for example based on the mean position of the respective keypoints in the data on which the keypoints have been selected.

These cuboids 404 are shown in a top-down view in Figure 4, the camera 202 having known pose **q*ₙ*** at each frame defining its position and orientation in the world frame, and the estimated bounding box 404 for the object at each frame n shown with an estimated pose **p*ₙ*** = (**r*ₙ*, θ*ₙ***), which has six degrees of freedom: three position coordinates and three orientation coordinates, size dimensions *W* × *L* × *H* and semantic keypoints defined within the cuboid with 3D position ${s}_{k} = \left({s}_{x}^{k}, {s}_{y}^{k}, {s}_{z}^{k}\right)$. These variables are jointly optimized.

Note that the size of the cuboid 404 and the position of the semantic keypoints **s*ₖ*** within the cuboid 404 are constant across all frames due to the assumption that the object being detected is a rigid body, and that its shape does not vary in time. Only the pose of the box 404 is allowed to vary in time. The optimisation is performed so as to fit the 3D bounding boxes and the semantic keypoints jointly based on the 2D semantic keypoint detections output by the 2D detector 302, and to fit a semantic keypoint model which defines an expected set of positions for the semantic keypoints based on real-world statistics. A cost function of the above variables may be defined which includes a term based on a reprojection error between the semantic keypoints **s*ₖ*** and 2D detected keypoints in the camera frame as output by the 3D detector. Since the 2D detected keypoints are represented by Gaussian distributions, this error may be defined as the distance between the projection *P*(**s*ₖ***) of the semantic keypoint in 3D into the 2D image plane. A second 'regularising' term of the cost function penalizes deviation in the 3D keypoints based on a learned distribution over 3D locations of those 3D keypoints within the 3D box for the given class of object.

A semantic keypoint model provides prior knowledge about the location of object features relative to the frame of reference of the object. For example, where one semantic keypoint is the front left headlight of the car, the semantic keypoint model specifies that the relative position of this keypoint should be at the front left of the car, relative to the car's own reference frame. The model may specify exact locations within a reference frame in which each semantic keypoint is expected. However, this may be too restrictive on shape of the object, and a more general model for a class of objects is to define a distribution in space for each keypoint within a reference frame. This distribution may be based on observed real-world statistics, for example multiple known car models may be aggregated to identify a statistical distributions for each of a set of pre-defined semantic keypoints.

For simplicity, only three semantic keypoints **s₁**, **s₂**, **s₃** are shown within the object frame of reference, however any suitable set of semantic keypoints may be defined. One example model specifies a set of 7 keypoints for each of the left and right-hand side of the vehicle, comprising the front wheel, front light, door handle, upper windshield, back light, back wheel and upper rear window. However, this is just one example, and any reasonable set of keypoints may be defined which correspond to visual features of the object class.

For classes like cars, the known left-right symmetry of the object may be exploited to reduce the number of semantic keypoint positions to be determined by half. In this case, the semantic keypoint detector is trained to detect keypoints for both sides of the object, and these keypoints are optimised according to the cost function described above. However, in optimising of the keypoint locations, only one half of the position parameters are determined, with the remaining points being a reflection of the determined points about the plane of symmetry for the object. Note that the optimisation penalises deviations between all detected keypoints in 2D, but that the 3D estimated keypoints are fully defined by only half the number of parameters in order to enforce symmetry on the .

Figure 5 shows the process of jointly optimising the pose and size of the bounding box as well as the locations of the semantic keypoints based on a 2D reprojection error from the detected semantic keypoints in the image plane (*E_{image}*) and a regularisation term to encourage the semantic keypoints to occupy their approximate expected locations (*Eₛₕₐₚₑ*) within the bounding box according to a learned prior distribution. A third contribution to the error function is a motion error *Eₘₒₜᵢₒₙ* which penalises unrealistic movement for the object, such as sudden jumps for a vehicle from one frame to another. This may be computed for each consecutive pair of frames. The overall error function is optimised across all frames, therefore obtaining an optimal set of size parameters comprising a set of bounding box dimensions and shape parameters, defining the locations of the semantic keypoint locations within it, and an optimal set of poses over all frames, with these poses being 'smoothed' across consecutive frames by the motion model.

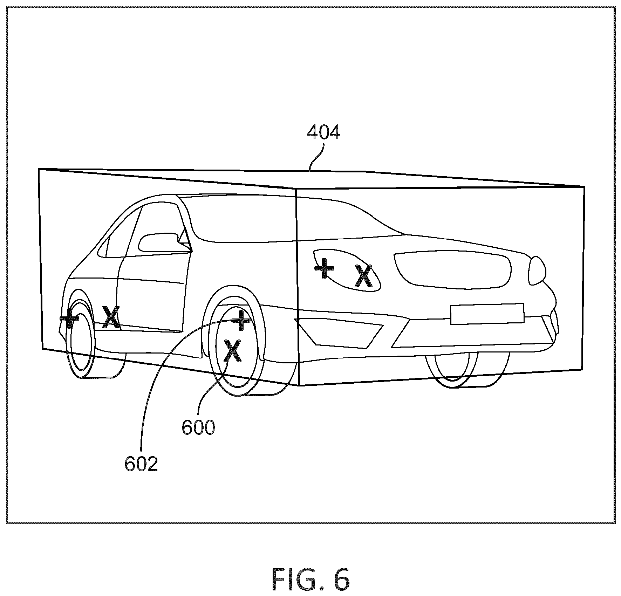

Figure 6 shows how the estimated 3D semantic keypoints within the bounding boxes 404 are reprojected into the image plane in 2D, where the keypoints may be 'lined up' against the 2D detected keypoints predicted by the 2D semantic keypoint detector. Figure 6 shows the bounding box 404 projected into the image plane, along with the estimated keypoints 600, denoted by 'x'. The original 2D detections 602 are denoted by '+'. The cost function encourages the pose of the box to be shifted until the 'x's and '+'s are closely aligned overall, while the positions of the semantic keypoints within the 3D bounding box may also be shifted for all frames (since this is assumed to be rigid, and thus does not change in time) so as to align the 'x's and '+'s across all frames.

### Signed Distance Fields

A 'signed distance field' (SDF) is a model representing a surface as a scalar field of signed distances. At each point, the value the field takes is the shortest distance from the point to the object surface, negative if the point is outside the surface and positive if the point is inside the surface.

For example, given a 2-sphere of radius r, described by the equation ${x}^{2} + {y}^{2} + {z}^{2} = {r}^{2}$ the value of the corresponding SDF, denoted F, is given as follows. $F \left(x, y, z\right) = r - √ \left({x}^{2}+{y}^{2}+{z}^{2}\right) .$

The value of the field F at a point is negative when the point is outside the surface, and positive when the point is inside the surface. The surface can be reconstructed as the 0-set of the field, i.e. the set of points at which it is zero.

A shape model 906 for objects may be learned by determining a latent shape space which enables an SDF surface for objects in the learned class to be represented by a small number of parameters, for example as few as 5 parameters may be used to fit a vehicle SDF. This is advantageous as it provides a faster optimisation due to fewer parameters to be optimised, and a potentially smoother optimisation surface.

A latent shape space may be learned in multiple ways. One possible method is based on 'DeepSDF' wherein a latent space of a given dimension is learned by training a decoder model implemented as a feed-forward neural network. The decoder model takes as input a 3D location **xⱼ** for a given object i and a 'latent code' vector **zᵢ** for that object, and outputs the value of the SDF representing the surface of that object at that point in 3D space. Multiple points **x*ⱼ*** may be input for each object i and a single latent vector **zᵢ** is associated with each object. The latent vector is intended to encode the shape of the object within a low-dimensional latent space. The latent space may be learned by training on a dataset with examples of the object class to be modelled, for example a synthetic dataset of 3D car models may be used to learn a shape space for cars. A dimensionality of the latent space is chosen in order to specify the number of parameters by which the surface model of the object should be defined. Learning of the latent space is done by training the decoder on a set of training examples from a dataset of car models, each training example comprising an input of a 3D point location and the corresponding signed distance value, where this is known for the training set of 3D object models. Each shape in the training example is associated with a plurality of 3D points and SDF values, and a latent code is associated with each shape. In training, both the parameters of the network and the latent code for each shape is learned by backpropagation through the network. DeepSDF is described, for example, in Zakharov et al. 'Autolabeling 3D Objects with Differentiable Rendering of SDF Shape Priors.

The parameters of the shape model could also be determined using principal component analysis (PCA). In this case, a shape space can be learned from a dataset of known object shapes by analysing a set of signed distance fields, which may be represented for example as a set of values for the SDF at points in a voxel grid, as mentioned above, and identifying the dimensions of the space in which the SDF is defined which have the greatest variance within the dataset of shape, and therefore encode the most shape information. These dimensions then form a basis defining the shape of an object in 3D. Modelling using a latent space based on PCA is described for example in Engelmann et al. 'Joint Object Pose Estimation and Shape Reconstruction in Urban Street Scenes Using 3D Shape Priors', and Engelmann et al. 'SAMP: Shape and Motion Priors for 4D Vehicle Reconstruction'

Once a latent space has been learned based on real or synthetic 3D data relating to the object class of interest, such as vehicles, SDFs may be used to generate refined shape and pose estimations for objects in a scenario, by fitting a shape model expressed within the learned latent space that best fits the sensor data, such as a lidar point cloud or stereo depth map.

A method will now be described where an SDF shape prior parameterised by a small number of latent space parameters is used to refine a set of 3D vehicle detections based on a 3D point cloud obtained from one or more sensors such as lidar, radar, etc. An initial 3D bounding box having a defined pose for the object may be obtained by applying a 3D detector, such as a run-time detector on the ego vehicle. An initial 3D SDF representation of the shape's surface may be placed within this bounding box at the given position and orientation. This could, for example, be a mean latent vector **z**₀ defining the mean shape based on the data on which the latent space was learned.

The optimisation of the shape and pose may then be performed by optimising a cost function 500 as described above, where in this case the cost function comprises at least:
a. A point-to-surface distance for all points in each frame based on the current shape and pose for that frame (this error may be any of *E_{lidar}, E_{radar}* and *E_{depth},* depending on which 3D sensor modalities are available. This cost is computed on a frame-by-frame basis and aggregated over the respective time series of frames.
b. A motion model that penalises deviations from expected constraints on movement for the given object class, e.g. penalising jumpy lateral movement for vehicles (*Eₘₒₜᵢₒₙ*)
c. An environmental model *Eₑₙᵥ* that penalises deviation from expected behaviour within an environment, for example this would penalise a model for vehicles which places the vehicle far above the ground plane, since a car should move along the road surface.

Both the pose of the bounding box and the parameters defining the shape of the object may be simultaneously adjusted during this optimisation to generate an improved shape and pose for the object, for example using gradient descent methods to determine an update for each parameter of the model.

Note that, although Figure 9 shows a set of bounding box size parameters, these may also be encoded in the latent shape space, such that the shape model parameters *θ_{S}* fully define both the size and the shape of the object.

Alternatively, different parameters may be optimised at different times. For example, the pose of the bounding box may be optimised first in order to minimise the total cost function while holding the shape of the object fixed, and the shape parameters may then be adjusted so as to minimise the cost function for a constant pose of the bounding box containing the shape. It should be noted that when modelling vehicles, the shape is assumed to be rigid, and thus only a single shape is learned over a set of frames, where the pose is assumed to change from frame to frame. However the described methods may also be applied to non-rigid objects by optimising over shape parameters that can change from frame to frame.

For each frame, the point to surface distance is summed for every point in that frame based on the current shape and pose for that frame, and the pose is adjusted so as to minimise the total point to surface distance. Then for all frames combined, assuming a rigid object, the shape parameters can be adjusted to minimise the overall error, where there is an assumption that the shape is the same across all frames since the object is rigid, as described above for the semantic keypoint implementation.

The point clouds over different frames may be aggregated based on the estimated bounding box poses. Over multiple iterations of updating the pose as described above, the aggregated point cloud becomes more precise and accurate, and the shape becomes more and more like the 'true' vehicle shape.

Note that the latent space model may encode the sizes as well as the shapes of the object classes, if trained on a set of objects within a class of varying sizes. In this case the 3D object model to be optimised is fully defined by the shape parameters **θ*_{S}*** with the object pose p also optimised. Alternatively, the latent space may be learned based on a set of normalised shapes, and the size parameters of the 3D surface being fitted may also be included in the optimisation, as described with reference to Figure 9, wherein both shape *θ_{S}* and size *θ_{B}* parameters (bounding box dimensions) are optimised.

The initial boxes could come from the run-time detections on the vehicle. These are normalised so as to enforce the constraint that the size of the object remains constant across all frames.

### Radar Velocity Cost Term

The generation of an expected Doppler velocity to be compared with radar measurements as part of the radar error term 510 will now be described in more detail.

Figure 12 shows an estimated object shape 1000 to be optimised based at least partly on a set of radar measurements, *Rₖ*, each measurement comprising a spatial position ***rₖ*** and a Doppler velocity *vₖ*, the shape defined by shape parameters **θ*_{S}*** and optionally size parameters **θ*_{B}***. Figure 12 shows a bird's eye 2D view, as this is the spatial information captured by radar measurements. A current 3D estimate of the object shape is projected into 2D to obtain a 2D shape 1000. As described above, the 3D shape model may be a signed distance field defining a 3D surface, and the 2D projection in this case would define the limits of the surface in a 2D birds eye-view. The shape 1000 is shown having some position, orientation, and size at time *Tₙ* (defined by the 2D projection of the current estimated pose p and size dimensions **θ*_{B}*** . A point ***rₖ*** has been captured at time *tₖ = Tₙ,* from a radar sensor location ***r**ₛₑₙₛₒᵣ,* where ***rₖ*** defines spatial coordinates of the radar measurements in a birds-eye view, i.e. a 2D spatial position. The point ***rₖ*** has azimuth *α_{K}* relative to a radar axis 502. The sensor location ***r**ₛₑₙₛₒᵣ* and the orientation of the radar axis 502 may also be time-dependent where the radar sensor is mounted on a moving vehicle, for example.

A point on the vehicle that is measured by the radar corresponding to ***rₖ*** may be estimated by first determining the velocity of the object's centre. This is computed given the motion model parameters *θ_{M}* described above. The parts of the shape's surface which are visible to the radar system is deduced based on the width of the shape and its current estimated orientation, and a function mapping the azimuth *αₖ* onto a side or part of the shape's surface that the radar should be observing according to the current estimated model of the object. The expected position on the object measured by the radar is the intersection of a ray 1002 from the radar sensor location ***r**ₛₑₙₛₒᵣ* in the direction of the azimuth *αₖ* and the observed part of the estimated object surface. A vector from the centre of the shape (i.e., the centre of motion) to the surface of the target, ***r**_{disp} = **r**_{com} - **r**_{surface},* is computed. The vector ***r**_{disp}* is then used to determine a predicted velocity at the incident surface of the shape as ***v**_{surface} = **u*** + ***ω*** × ***r**_{disp}.* Here, ***u*** is the linear velocity of the centre of mass of the shape 1000 at time *Tₙ,* and ***ω*** the angular velocity at time *Tₙ.* As noted, these are parameters *θ_{M}* of the motion model. Finally, the velocity *v_{surface}* is projected to the ray 1002 to determine an expected Doppler velocity for the given radar point.

The contribution of the Doppler velocity to the radar error term 510 is then determined based on a measure of distance between the expected Doppler velocity and the Doppler velocity ***vₖ*** corresponding to the radar return ***rₖ**.*

A computer system may comprise execution hardware which is configured to execute the method/algorithmic steps disclosed herein. The term execution hardware encompasses any form/combination of hardware configured to execute the relevant method/algorithmic steps. The execution hardware may take the form of one or more processors, which may be programmable or non-programmable, or a combination of programmable and non-programmable hardware may be used. Exampled of suitable programmable processors include general purpose processors based on an instruction set architecture, such as CPUs, GPUs/accelerator processors etc. Such general-purpose processors typically execute computer readable instructions held in memory coupled to the processor and carry out the relevant steps in accordance with those instructions. Other forms of programmable processors include field programmable gate arrays (FPGAs) having a circuit configuration programmable though circuit description code. Examples of non-programmable processors include application specific integrated circuits (ASICs). Code, instructions etc. may be stored as appropriate on transitory or non-transitory media (examples of the latter including solid state, magnetic and optical storage device(s) and the like).

## Claims

1. A computer-implemented method of locating and modelling a moving 3D object captured in a time sequence of multiple images (310), the method comprising:
applying, to each image (310), semantic keypoint detection, in order to generate a set of 2D semantic keypoint detections (602) in an image plane of the image (308);
receiving, for each image (310), a camera (202) pose and an initial object pose, each pose comprising a 3D location and 3D orientation;
determining an initial 3D model (404) of the 3D object;
based on the initial 3D model (404), and the initial object pose and the camera (202) pose for each image, computing a set of keypoint projections (600) in the image plane of the image, the keypoint projections (600) being 2D projections of 3D semantic keypoints of the initial 3D model (404); and
determining a new 3D model and a new object pose for each image (310) based on an aggregate reprojection error (912) between the 2D semantic keypoint detections (602) and the keypoint projections (600) across the time sequence of multiple images (310).

2. The method of claim 1, wherein the new 3D model and the new object pose are determined via optimization of a cost function (500), the cost function (500) comprising a reprojection error term.

3. The method of claim 1 or 2, wherein each semantic keypoint detection pertains to a semantic keypoint type, and is in the form of a distribution (308) over possible 2D semantic keypoint locations in the image plane for that semantic keypoint type, the distribution (308) encoding detection confidence for that semantic keypoint type.

4. The method of claims 2 and 3, wherein the aggregate (518) reprojection error for each semantic keypoint type is weighted in the reprojection error term according to the detection confidence for that semantic keypoint type.

5. The method of claim 4, wherein the distribution (308) over possible 2D semantic keypoint locations is Gaussian, and the aggregate (518) reprojection error is weighted by covariance for each keypoint type.

6. The method of any of claims 2 to 5, wherein the cost function (500) comprises a regularization term that penalizes deviation between the 3D semantic keypoints and a 3D semantic keypoint prior.

7. The method of claim 6, wherein the 3D semantic keypoint prior comprises, a distribution over possible 3D semantic keypoint locations for each semantic keypoint type, the distribution encoding an extent of expected variation in the 3D semantic keypoint locations, wherein the penalty for each semantic keypoint type in the regularization term is weighted according to the extent of expected variation for that semantic keypoint type.

8. The method of any of claims 2 to 5, wherein the 3D model encodes expected location information about the 3D keypoints.

9. The method of claim 8, wherein the 3D model has a set of one or more shape parameters (906) that define a shaped 3D object surface, wherein the semantic keypoints are defined relative to the shaped 3D object surface, wherein the new 3D model is determined by tuning the shape parameters (906).

10. The method of claim 2 or any claim dependent thereon, wherein the new 3D model and the new object pose are determined using a structure from motion algorithm applied to the cost function (500), but with the camera (202) poses fixed and without any assumption that the moving 3D object remains static.

11. The method of any preceding claim, wherein the 3D semantic keypoints of the 3D model correspond to only a first subset of the 2D semantic keypoint detections (602) for each image (310), and a set of reflected 3D semantic keypoints, corresponding to a second subset of the 2D semantic keypoint detections (602), is determined by reflecting the 3D semantic keypoints about a symmetry plane of the 3D object model, wherein the aggregate (518) reprojection error is determined between (i) the 3D semantic keypoints and the first subset of 2D semantic keypoint detections (602), and (ii) the reflected 3D semantic keypoints and the second subset of 2D semantic keypoint detections (602).

12. The method of claim 6 or any claim dependent thereon, wherein the object belongs to a known object class (1102), and the semantic keypoint prior or the expected location information has been learned from a training set comprising example objects of the known object class (1102),
the method further comprising:
using an object classifier (1100) to determine the known object class (1102) from multiple available object classes, the multiple object classes associated with respective expected 3D shape information.

13. The method of any preceding claim, wherein a single 3D model is determined for the time sequence of images (310) for modelling a rigid object.

14. A computer system comprising one or more computers configured to implement the method of any preceding claims.

15. Computer program code configured to program a computer system to implement the method of any of claims 1 to 13.

## Patentansprüche

1. Computerimplementiertes Verfahren zum Lokalisieren und Modellieren eines sich bewegenden 3D-Objekts, das in einer Zeitsequenz aus mehreren Bildern (310) erfasst wurde, das Verfahren umfassend:
Anwenden einer semantischen Schlüsselpunkterkennung auf jedes Bild (310), um eine Menge von 2D-semantischen Schlüsselpunkterkennungen (602) in der Bildebene des Bildes (308) zu erzeugen;
Empfangen, für jedes Bild (310), einer Position der Kamera (202) und einer anfänglichen Objektposition, wobei jede Position eine 3D-Position und eine 3D-Ausrichtung umfasst;
Bestimmen eines anfänglichen 3D-Modells (404) des 3D-Objekts;
auf der Grundlage des ursprünglichen 3D-Modells (404) sowie der ursprünglichen Objektposition und der Position der Kamera (202) für jedes Bild, Berechnen eines Satzes von Schlüsselpunktprojektionen (600) in der Bildebene des Bildes, wobei die Schlüsselpunktprojektionen (600) 2D-Projektionen von 3D-semantischen Schlüsselpunkten des ursprünglichen 3D-Modells (404) sind; und
Bestimmen eines neuen 3D-Modells und einer neuen Objektposition für jedes Bild (310) auf der Grundlage eines aggregierten Reprojektionsfehlers (912) zwischen den 2D-Erkennungen semantischer Schlüsselpunkte (602) und den Schlüsselpunktprojektionen (600) über die Zeitsequenz mehrerer Bilder (310) hinweg.

2. Verfahren nach Anspruch 1, wobei das neue 3D-Modell und die neue Objektposition durch Optimierung einer Kostenfunktion (500) bestimmt werden, wobei die Kostenfunktion (500) einen Reprojektionsfehlerbegriff umfasst.

3. Verfahren nach Anspruch 1 oder 2, wobei sich jede Erkennung eines semantischen Schlüsselpunkts auf einen Typ eines semantischen Schlüsselpunkts bezieht und in Form einer Verteilung (308) über mögliche 2D-Positionen des semantischen Schlüsselpunkts in der Bildebene für diesen Typ eines semantischen Schlüsselpunkts vorliegt, wobei die Verteilung (308) die Erkennungssicherheit für diesen Typ eines semantischen Schlüsselpunkts codiert.

4. Verfahren nach den Ansprüchen 2 und 3, wobei der aggregierte (518) Reprojektionsfehler für jeden semantischen Schlüsselpunkttyp im Reprojektionsfehlerbegriff entsprechend der Erkennungssicherheit für diesen semantischen Schlüsselpunkttyp gewichtet wird.

5. Verfahren nach Anspruch 4, wobei die Verteilung (308) über mögliche 2D-Positionen semantischer Schlüsselpunkte gaußförmig ist und der aggregierte (518) Reprojektionsfehler für jeden Schlüsselpunkttyp anhand der Kovarianz gewichtet wird.

6. Verfahren nach einem der Ansprüche 2 bis 5, wobei die Kostenfunktion (500) einen Regularisierungsbegriff umfasst, der Abweichungen zwischen den 3D-semantischen Schlüsselpunkten und einem 3D-semantischen Schlüsselpunkt-A-priori bestraft.

7. Verfahren nach Anspruch 6, wobei die 3D-Semantik-Schlüsselpunkt-A-Priori-Verteilung eine Verteilung über mögliche 3D-Semantik-Schlüsselpunkt-Positionen für jeden Semantikschlüsselpunkttyp umfasst, wobei die Verteilung das Ausmaß der erwarteten Variation der 3D-Semantikschlüsselpunktpositionen codiert, wobei die Straffunktion für jeden Semantikschlüsselpunkttyp im Regularisierungsbegriff entsprechend dem Ausmaß der erwarteten Variation für diesen Semantikschlüsselpunkttyp gewichtet wird.

8. Verfahren nach einem der Ansprüche 2 bis 5, wobei das 3D-Modell erwartete Positionsinformationen über die 3D-Schlüsselpunkte codiert.

9. Verfahren nach Anspruch 8, wobei das 3D-Modell einen Satz aus einem oder mehreren Formparametern (906) aufweist, die eine geformte 3D-Objektoberfläche definieren, wobei die semantischen Schlüsselpunkte relativ zu der geformten 3D-Objektoberfläche definiert sind und wobei das neue 3D-Modell durch Anpassen der Formparameter (906) bestimmt wird.

10. Verfahren nach Anspruch 2 oder einem davon abhängigen Anspruch, wobei das neue 3D-Modell und die neue Objektposition unter Verwendung eines auf die Kostenfunktion (500) angewendeten "Structure-from-Motion"-Algorithmus bestimmt werden, wobei jedoch die Positionen der Kamera (202) feststehen und keine Annahme getroffen wird, dass das sich bewegende 3D-Objekt statisch bleibt.

11. Verfahren nach einem der vorstehenden Ansprüche, wobei die semantischen 3D-Schlüsselpunkte des 3D-Modells nur einen ersten Teilsatz der Erfassungen semantischer 2D-Schlüsselpunkte (602) für jedes Bild (310) entsprechen und ein Satz reflektierter semantischer 3D-Schlüsselpunkte, die einem zweiten Teilsatz der Erfassungen semantischer 2D-Schlüsselpunkte (602) entspricht, durch Spiegelung der 3D-semantischen Schlüsselpunkte an einer Symmetrieebene des 3D-Objektmodells ermittelt wird, wobei der aggregierte (518) Reprojektionsfehler zwischen (i) den 3D-semantischen Schlüsselpunkten und dem ersten Teilsatz der 2D-semantischen Schlüsselpunkterkennungen (602) und (ii) den reflektierten 3D-semantischen Schlüsselpunkten und dem zweiten Teilsatz der 2D-semantischen Schlüsselpunkterkennungen (602) bestimmt.

12. Verfahren nach Anspruch 6 oder einem davon abhängigen Anspruch, wobei das Objekt zu einer bekannten Objektklasse (1102) gehört und der semantische Schlüsselpunkt oder die erwartete Positionsinformation aus einem Trainingssatz gelernt wurde, der Beispielobjekte der bekannten Objektklasse (1102) umfasst,
das Verfahren ferner umfassend:
Verwenden eines Objektklassifikators (1100) zur Bestimmung der bekannten Objektklasse (1102) aus mehreren verfügbaren Objektklassen, wobei die mehreren Objektklassen den jeweiligen erwarteten 3D-Forminformationen zugeordnet sind.

13. Verfahren nach einem der vorstehenden Ansprüche, wobei für die Bildzeitsequenz (310) ein einziges 3D-Modell zur Modellierung eines starren Objekts bestimmt wird.

14. Computersystem, umfassend einen oder mehrere Computer, die konfiguriert sind, um das Verfahren nach einem der vorstehenden Ansprüche auszuführen.

15. Computerprogrammcode, der konfiguriert ist, um ein Computersystem zu programmieren, um das Verfahren nach einem der Ansprüche 1 bis 13 auszuführen.

## Revendications

1. Procédé implémenté par ordinateur de localisation et de modélisation d'un objet 3D en mouvement capturé dans une séquence temporelle de plusieurs images (310), le procédé comprenant :
l'application, à chaque image (310), d'une détection de point clé sémantique, afin de générer un ensemble de détections de points clés sémantiques 2D (602) dans un plan d'image de l'image (308) ;
la réception, pour chaque image (310), d'une pose de caméra (202) et d'une pose d'objet initiale, chaque pose comprenant un emplacement 3D et une orientation 3D ;
la détermination d'un modèle 3D initial (404) de l'objet 3D ;
sur la base du modèle 3D initial (404), et de la pose d'objet initiale et de la pose de caméra (202) pour chaque image, le calcul d'un ensemble de projections de points clés (600) dans le plan d'image de l'image, les projections de points clés (600) étant des projections 2D de points clés sémantiques 3D du modèle 3D initial (404) ; et
la détermination d'un nouveau modèle 3D et d'une nouvelle pose d'objet pour chaque image (310) sur la base d'une erreur de reprojection agrégée (912) entre les détections de points clés sémantiques 2D (602) et les projections de points clés (600) sur la séquence temporelle de plusieurs images (310).

2. Procédé selon la revendication 1, dans lequel le nouveau modèle 3D et la nouvelle pose d'objet sont déterminés par optimisation d'une fonction de coût (500), la fonction de coût (500) comprenant un terme d'erreur de reprojection.

3. Procédé selon la revendication 1 ou 2, dans lequel chaque détection de point clé sémantique se rapporte à un type de point clé sémantique et se présente sous la forme d'une distribution (308) sur les emplacements de points clés sémantiques 2D possibles dans le plan d'image pour ce type de point clé sémantique, la distribution (308) codant la confiance de détection pour ce type de point clé sémantique.

4. Procédé selon les revendications 2 et 3, dans lequel l'erreur de reprojection agrégée (518) pour chaque type de point clé sémantique est pondérée dans le terme d'erreur de reprojection selon la confiance de détection pour ce type de point clé sémantique.

5. Procédé selon la revendication 4, dans lequel la distribution (308) sur les emplacements de points clés sémantiques 2D possibles est gaussienne, et l'erreur de reprojection agrégée (518) est pondérée par la covariance pour chaque type de point clé.

6. Procédé selon l'une quelconque des revendications 2 à 5, dans lequel la fonction de coût (500) comprend un terme de régularisation qui pénalise l'écart entre les points clés sémantiques 3D et un a priori de points clés sémantiques 3D.

7. Procédé selon la revendication 6, dans lequel l'a priori de points clés sémantiques 3D comprend, une distribution sur les emplacements de points clés sémantiques 3D possibles pour chaque type de point clé sémantique, la distribution codant une étendue de variation attendue dans les emplacements de points clés sémantiques 3D, dans lequel la pénalité pour chaque type de point clé sémantique dans le terme de régularisation est pondérée selon l'étendue de variation attendue pour ce type de point clé sémantique.

8. Procédé selon l'une quelconque des revendications 2 à 5, dans lequel le modèle 3D code des informations d'emplacement attendues concernant les points clés 3D.

9. Procédé selon la revendication 8, dans lequel le modèle 3D a un ensemble d'un ou plusieurs paramètres de forme (906) qui définissent une surface d'objet 3D profilée, dans lequel les points clés sémantiques sont définis par rapport à la surface d'objet 3D profilée, et dans lequel le nouveau modèle 3D est déterminé en ajustant les paramètres de forme (906).

10. Procédé selon la revendication 2 ou l'une quelconque revendication dépendante de celle-ci, dans lequel le nouveau modèle 3D et la nouvelle pose d'objet sont déterminés à l'aide d'une structure à partir d'un algorithme de mouvement appliqué à la fonction de coût (500), mais avec les poses de caméra (202) fixes et sans aucune supposition que l'objet 3D en mouvement reste statique.

11. Procédé selon l'une quelconque revendication précédente, dans lequel les points clés sémantiques 3D du modèle 3D correspondent uniquement à un premier sous-ensemble des détections de points clés sémantiques 2D (602) pour chaque image (310), et un ensemble de points clés sémantiques 3D réfléchis, correspondant à un second sous-ensemble des détections de points clés sémantiques 2D (602), est déterminé en réfléchissant les points clés sémantiques 3D par rapport à un plan de symétrie du modèle d'objet 3D, dans lequel l'erreur de reprojection agrégée (518) est déterminée entre (i) les points clés sémantiques 3D et le premier sous-ensemble de détections de points clés sémantiques 2D (602), et (ii) les points clés sémantiques 3D réfléchis et le second sous-ensemble de détections de points clés sémantiques 2D (602).

12. Procédé selon la revendication 6 ou l'une quelconque revendication dépendante de celle-ci, dans lequel l'objet appartient à une classe d'objets connue (1102), et l'a priori de points clés sémantiques ou les informations d'emplacement attendues ont été apprises à partir d'un ensemble d'entraînement comprenant des exemples d'objets de la classe d'objets connue (1102),
le procédé comprenant en outre :
l'utilisation d'un classifieur d'objets (1100) pour déterminer la classe d'objets connue (1102) à partir de plusieurs classes d'objets disponibles, les plusieurs classes d'objets étant associées à des informations de forme 3D attendues respectives.

13. Procédé selon l'une quelconque revendication précédente, dans lequel un modèle 3D unique est déterminé pour la séquence temporelle d'images (310) permettant de modéliser un objet rigide.

14. Système informatique comprenant un ou plusieurs ordinateurs configurés pour implémenter le procédé selon l'une quelconque des revendications précédentes.

15. Code de programme informatique conçu pour programmer un système informatique afin d'implémenter le procédé selon l'une quelconque des revendications 1 à 13.
